# EUROPÄISCHE PATENTSCHRIFT

(11) **EP 2 794 063 B1**
(45) Veröffentlichungstag und Bekanntmachung des Hinweises auf die Patenterteilung: **08.01.2020**
(21) Anmeldenummer: 12795737.1
(22) Anmeldetag: 28.11.2012
(51) Int. Cl.: B01D 53/04, B01D 53/26, B60G 17/052, B60G 17/04

(54) **DRUCKLUFTVERSORGUNGSANLAGE, DRUCKLUFTVERSORGUNGSSYSTEM UND FAHRZEUG, INSBESONDERE PKW, MIT EINER DRUCKLUFTVERSORGUNGSANLAGE**
COMPRESSED AIR SUPPLY UNIT, COMPRESSED AIR SUPPLY SYSTEM, AND VEHICLE, IN PARTICULAR PASSENGER CAR, HAVING A COMPRESSED AIR SUPPLY UNIT
INSTALLATION D'ALIMENTATION EN AIR COMPRIMÉ, SYSTÈME D'ALIMENTATION EN AIR COMPRIMÉ ET VÉHICULE, EN PARTICULIER VÉHICULE PARTICULIER, ÉQUIPÉ D'UNE INSTALLATION D'ALIMENTATION EN AIR COMPRIMÉ

(30) Priorität: 23.12.2011 DE 102011122289; 19.03.2012 DE 102012005308
(43) Veröffentlichungstag der Anmeldung: 29.10.2014
(73) Patentinhaber: WABCO GmbH, 30453 Hannover (DE)
(72) Erfinder: BERGEMANN, Klaus-Dieter, 30627 Hannover (DE); BREDBECK, Klaus, 31628 Landesbergen (DE); FRANK, Dieter, 30171 Hannover (DE); GEHRKE, Morten, 30974 Wennigsen (DE); MEISSNER, Frank, 30453 Hannover (DE); STABENOW, Uwe, 30880 Laatzen (DE)
(74) Vertreter: Lauerwald, Jörg
(86) Internationale Anmeldenummer: PCT/EP2012/004890
(87) Internationale Veröffentlichungsnummer: WO 2013/091764

(56) Entgegenhaltungen:
- EP-A1- 0 919 277
- EP-B1- 1 233 183
- WO-A1-99/37387
- JP-U- S5 878 133
- US-A- 3 324 631
- US-A- 4 398 929
- US-A- 5 901 459
- US-A- 5 930 910
- US-A- 5 983 516
- US-A- 6 000 432
- US-B1- 6 203 601

## Beschreibung

Die Erfindung betrifft eine Druckluftversorgungsanlage gemäß dem Oberbegriff des Anspruchs 1. Weiter betrifft die Erfindung ein Druckluftversorgungssystem nach Anspruch 16 und ein Fahrzeug, insbesondere einen PKW, nach Anspruch 17.

Eine Druckluftversorgungsanlage wird in Fahrzeugen aller Art, insbesondere zur Versorgung einer Luftfederanlage eines PKW mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Druckluftversorgungssystems umfasst eine Anzahl von an einer gemeinsamen Leitung (Galerie) pneumatisch angeschlossenen Luftbälgen, die mit zunehmender Befüllung den Fahrzeugaufbau anheben und mit abnehmender Befüllung absenken können. Ein solches System wird bevorzugt in einem Geländefahrzeug und einem Sport-Utility-Vehicle (SUV) eingesetzt. Eine Druckluftversorgungsanlage zur Verwendung in einem pneumatischen Druckluftversorgungssystem mit einer Pneumatikanlage, beispielsweise mit einer zuvor beschriebenen Luftfederanlage, wird mit Druckluft aus einer Druckluftzuführung betrieben, beispielsweise im Rahmen eines Druckniveaus von 5 bis 20 bar. Die Druckluft wird mittels eines Luftverdichters (Kompressor) der Druckluftzuführung zur Verfügung gestellt. Die Druckluftzuführung ist einerseits zur Versorgung der Pneumatikanlage mit einem Druckluftanschluss pneumatisch verbunden und andererseits mit einem Entlüftungsanschluss pneumatisch verbunden. Über eine Entlüftungsventilanordnung kann die Druckluftversorgungsanlage und/oder die Pneumatikanlage durch Ablassen von Luft zum Entlüftungsanschluss hin entlüftet werden.

Zur Sicherstellung eines langfristen Betriebs der Druckluftversorgungsanlage weist diese einen Lufttrockner auf, mit dem die Druckluft zu trocknen ist. Dadurch wird die Ansammlung von Feuchtigkeit in dem Druckluftversorgungssystem vermieden, die ansonsten bei vergleichsweise niedrigen Temperaturen zu ventilschädigender Kristallbildung und sonstigen unerwünschten Effekten in der Druckluftversorgungsanlage und in der Pneumatikanlage führen kann. Ein Lufttrockner weist ein Trockenmittel auf, üblicherweise eine Granulatschüttung, welche von der Druckluft durchströmbar ist, so dass die Granulatschüttung -bei vergleichsweise hohem Druck- in der Druckluft enthaltende Feuchtigkeit durch Adsorption aufnehmen kann. Es hat sich bewährt, das Trockengranulat in einer separaten, auswechselbaren Trocknerkartusche unterzubringen, die in ein Trocknergehäuse eingesetzt wird. Eine solche Trocknerkartusche hat ein Trocknerbett zur U-förmigen oder abwechselnd gegenläufigen Führung einer Druckluftströmung in einer Anordnung von zu durchfließenden Ringräumen. Die Trocknerkartusche kann leicht ausgewechselt werden. Zum Anderen wird durch die Führung der Druckluftströmung in den zu durchströmenden Ringräumen das Trocknerbett verlängert und somit die Trocknung der Druckluft verbessert.

Eine beispielsweise aus WO 2005/051521 A1 bekannte Trocknerkartusche für ein Nutzfahrzeug sieht einen grundsätzlichen Aufbau mit einem äußeren Ringraum und einem inneren Zentralraum in der Trocknerkartusche vor, so dass eine Druckluftströmung durch den gesamten äußeren Ringraum der Trocknerkartusche strömt, in einem Dom über dem Ringraum zum Zentralraum umgeleitet und in Gegenstromrichtung parallel zum äußeren Ringraum in dem Zentralraum geführt wird; die Druckluftströmung verlässt die Trocknerkartusche auf der gleichen Seite wie beim Einströmen. Aus DE 10 2006 037 307 A1 ist eine Trocknerkartusche offenbart, die eine mäanderartige Verschachtelung solcher Ringräume vorsieht, wobei die Ringräume dem gleichen Prinzip folgend parallel und im Gegenstrom von einer Druckluftströmung durchströmt werden; d. h. ein Trockenbehälter in Form der Trocknerkartusche hat eine äußere Behälteraußenwandung und eine Anzahl von Ringwänden entlang einer Längserstreckung der Trocknerkartusche, wobei die Ringwände einen von der Behälteraußenwand begrenzten Innenraum der Trocknerkartusche in eine Vielzahl von Ringräumen teilt, die pneumatisch verbunden sowie parallel und im Gegenstrom durchströmbar sind.

Eine alternative Ausführung einer auswechselbaren Trocknerkartusche ist aus EP 1 048 540 A1 bekannt, wobei die Trocknerkartusche mit einer Behälteraußenwandung gebildet ist, deren Innenraum durch eine Anzahl von sich über den Querschnitt des Innenraums erstreckenden, lose eingelegten Trennplatten in Partitionen unterteilt ist, die sich über den gesamten Querschnitt des Innenraums erstrecken. Die Druckluftströmung tritt über einen schmalen äußeren Ringraum in die Trocknerkartusche ein, wird in einem Dom derselben umgeleitet und durchströmt die Partitionen zwischen den Platten jeweils quer zu einer Längserstreckung der Trocknerkartusche. Eine solche Trocknerkartusche verursacht einen vergleichsweise hohen Druckverlust bei einer Druckluftströmung.

EP 1 233 183 B1 beschreibt eine Druckluftregeleinrichtung mit einem Lufttrockner in dessen Gehäuse ein topfförmiger Trockenbehälter eingesetzt ist und dessen Inneres über das Gehäuse einerseits mit einer Druckmittelquelle und andererseits mit einem Druckspeicher über eine Ventilanordnung verbindbar ist. Die Ventilanordnung sieht ein erstes, zweites und drittes steuerbares Wegeventil vor, wobei zwei der Ventile zur Öffnung eines ersten und zweiten Durchlasses im Boden des Trockenbehälters dienen. Gegenüber dem Boden des Trockenbehälters ist dieser offen, wobei das im Trockenbehälter enthaltende Granulat über eine Abschlussplatte gehalten ist, die auf einem zentralen Stab zentriert und daran endseitig mittels einer Federklammer befestigt ist. Der den Stab umgebende Innenraum des Trockenbehälters ist in zwei Richtungen, zum Entleeren bzw. Füllen des Druckspeichers durchströmbar. Dieser Aufbau ist vergleichsweise komplex und in seiner Funktion verbesserbar.

Die EP 0 919 277 A1 offenbart ein Doppelturm-Lufttrocknungssystem zum Reinigen und Trocknen eines ungereinigten Druckluftstroms mit einem Zentrifugalabscheider, in dem eine Ablenkplatte horizontal angeordnet ist, um die Zentrifugalkammer im allgemeinen in eine obere und eine untere Unterkammer zu trennen; ein Paar von Lufttrockner-Kammern, die jeweils Trockenmittel enthalten, und ein Spülrohr mit einem darüber befindlichen Klappenventil, um den Luftstrom durch das Spülrohr zu schließen und zu beschränken, wenn Luft nach oben durch den Hohlraum strömt, und um zu öffnen und Förderung des Luftstroms durch das Spülrohr, wenn Luft durch den Hohlraum nach unten strömt; ein Paar Zweiwegeventile, um entweder einen Luftstrom von dem Zentrifugalabscheider zu einer Lufttrockner-Kammer zu liefern oder eine Lufttrockner-Kammer zur Atmosphäre hin zu öffnen; eine Zeitgebersteuerung zum abwechselnden und periodischen Ändern des Zustands der Zweiwegeventile, so dass, wenn eine Luft durch eine Lufttrockner-Kammer getrocknet wird, die andere Lufttrcockner-Kammer zur Atmosphäre offen ist; ein Wechselventil zum Einlassen eines Ausgangsprozentsatzes von Luft, die aus einer der Lufttrockner-Kammern austritt, in eine Speicherkammer und zum Umleiten eines Spülprozentsatzes der Luft in die andere Lufttrockner-Kammer, aus der keine Luft austritt. Das Dokument EP 0 919 277 A1 offenbart den Oberbegriff des Anspruchs 1.

Aus der US 4 398 929 A ist ein Druckluftentfeuchter bekannt, der zwei im Wesentlichen identische adsorbergefüllte Behälter A und B umfasst, die über eine Teilungswand miteinander verbunden sind. Der Entfeuchter umfasst Ventileinrichtungen zum abwechselnden Einschalten jeweils eines Behälters in ein Druckluftsystem, sowie ein Steuerventil für das abwechselnde Anschließen und für ein Abführen von Entfeuchtungsluft aus dem jeweils nicht angeschlossenen Behälter zur Umgebungsluft. Das Steuerventil hat einen zwischen zwei Sitzen bewegbaren und dort mit einem Ventilschaft verriegelbaren Ventilkörper.

Aus der JP S58-78133 U ist ein Lufttrockner für Fahrzeughöhenregelsysteme bekannt, bei dem ein Silica-gefülltes Volumen durch eine Trennplatte in ein Teilvolumen A in das Versorgungsluft einströmt und ein Teilvolumen B aus dem getrocknete Luft zur Höhenregelung hin ausströmt, geteilt ist. Die Trennplatte hat einen Durchlass, der den Übertritt des Luftstroms vom Teilvolumen A in das Teilvolumen B ermöglicht. Dadurch dass der Durchlass maximal entfernt vom Einlass in das Teilvolumens A und vom Auslass aus dem Teilvolumen B angeordnet wird, wird der Durchströmungsweg lang und die Entfeuchtungswirkung groß.

Wünschenswert ist eine verbesserte Lufttrocknung, insbesondere mit einem verbesserten Trocknerbett, bei noch akzeptablem Druckverlust. Die verbesserte Lufttrocknung soll insbesondere auch zur Verwendung in einem PKW geeignet sein. Insbesondere soll eine Lufttrockneranordnung bauraumsparend realisierbar sein.

An dieser Stelle setzt die Erfindung an, deren Aufgabe es ist, eine Vorrichtung, insbesondere eine Druckluftversorgungsanlage, zum Betreiben einer Pneumatikanlage mit einer Druckluftströmung anzugeben, mittels der eine verbesserte Lufttrocknung realisierbar ist. Insbesondere soll die Lufttrocknung mit einem vergleichsweise langen Trocknerbett bei noch akzeptablem Druckverlust realisierbar sein. Insbesondere soll die Druckluftversorgungsanlage dennoch vergleichsweise kompakt sein, vorzugsweise für ein PKW-Fahrzeug besonders geeignet sein. Aufgabe der Erfindung ist es auch, ein entsprechendes Druckluftversorgungssystem und ein Fahrzeug mit dem Druckluftversorgungssystem sowie eine bevorzugte Verwendung anzugeben.

Die Aufgabe hinsichtlich der Druckluftversorgungsanlage wird mit einer Druckluftversorgungsanlage des Anspruchs 1 gelöst. Die Aufgabe betreffend das Druckluftversorgungssystem wird mit einem Druckluftversorgungssystem des Anspruchs 18 gelöst. Die Erfindung führt auch auf ein Fahrzeug, insbesondere ein PKW-Fahrzeug des Anspruchs 19. Die Erfindung führt auch auf eine Verwendung nach Anspruch 20.

Die Erfindung geht von der Überlegung aus, dass der grundsätzliche Ansatz zur Realisierung eines verlängerten Trocknerbetts mittels einer Anordnung von zu durchströmenden Räumen genutzt werden kann, um die Trocknerleistung einer Lufttrockneranordnung zu erhöhen. Die Erfindung hat erkannt, dass gleichwohl, u. a. zur Begrenzung eines Druckverlusts und zur Realisierung einer kompakten Anordnung, die Anordnung von zu durchfließenden Räumen noch verbesserbar ist. Die Erfindung hat erkannt, dass es zur Auslegung einer Lufttrockneranordnung erheblich vorteilhafter ist, wenn ein Trockenbehälter der Lufttrockneranordnung mit einer Behälteraußenwandung und einem Steg entlang einer Längserstreckung des Trockenbehälters gebildet ist, wobei der Steg einen von der Behälteraußenwand begrenzten Innenraum in eine erste und eine zweite Kammer teilt, die gleichwohl über eine pneumatische Verbindung verbunden sind. Darüber hinaus hat die Erfindung erkannt, dass eine unter Berücksichtigung der Aufgabe verbesserte Lufttrocknung dadurch erreichbar ist, dass der

Steg längs der Längserstreckung an die Behälteraußenwandung anschließt und den Innenraum des Trockenbehälters in eine erste Kammer und eine zweite Kammer aufteilt, die nebeneinander angeordnet sind, wobei die erste und die zweite Kammer durch den Steg und die Behälteraußenwandung begrenzt sind. Dies hat den Vorteil einer vergleichsweise kompakten und robusten Bauweise bei verbesserter Trocknerleistung.

Die Erfindung hat erkannt, dass ein Trockenbehälter mit insoweit bereits verbessertem Trocknerbett auch mit einer verbesserten Druckverlustbegrenzung betrieben und kompakter ausgebildet werden kann. Dadurch dass die erste und zweite Kammer nebeneinander angeordnet sind und beide durch den Steg und die Behälteraußenwandung begrenzt sind, ist der Trockenbehälter auch kompakter und drucksicherer hinsichtlich eines Betriebsdrucks abdichtbar und bis zu einem höheren Berstdruck auslegbar.

Das Konzept der Erfindung führt auch auf eine Verwendung der erfindungsgemäßen Druckluftversorgungsanlage zum Betreiben der Pneumatikanlage, insbesondere einer Luftfederanlage, mit einer Druckluftströmung (DL) in einem PKW, insbesondere in einem SUV. Das Konzept unterstützt mit der kompakten und drucksicheren Auslegung des Trockenbehälters die bei dieser Verwendung auftretenden schnellen Entlüftungszyklen und den hohen Luftverbrauch und Speicherbetrieb.

Das Konzept der Erfindung ist nicht beschränkt auf eine Druckluftversorgungsanlage mit einer Trockneranordnung, die einen Trockenbehälter mit --gleichwohl besonders vorteilhaftnur zwei durch einen einzigen Steg getrennten Kammern hat. Vielmehr kann ein Trockenbehälter dem Konzept der Erfindung folgend auch mehr als zwei Kammern und/oder mehr als einen Steg haben. Beispielsweise kann in einer Variante vorgesehen sein, dass ein erster und ein zweiter Steg entlang einer Längserstreckung des Trockenbehälters einen von der Behälteraußenwandung begrenzten Innenraum in eine erste und eine zweite und eine dritte Kammer teilt, wobei die erste Kammer und die zweite Kammer durch den ersten Steg und die Behälteraußenwandung begrenzt sind und die zweite Kammer und die dritte Kammer durch den zweiten Steg und die Behälteraußenwandung begrenzt sind, und der erste und zweite Steg längs der Längserstreckung an die Behälteraußenwandung anschließt und die erste, zweite und dritte Kammer längs der Längserstreckung nebeneinander angeordnet sind. Es können auch mehr als zwei Stege und/oder mehr als drei Kammern vorgesehen sein.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Insbesondere ist die erste Kammer mit dem Steg und einem sich im Wesentlichen entlang der Längserstreckung erstreckenden ersten Teil der Behälteraußenwandung --nämlich einer ersten äußeren Längsseite derselben- und die zweite Kammer mit dem Steg und einem sich im Wesentlichen entlang der Längserstreckung erstreckenden zweiten Teil der Behälteraußenwandung -nämlich einer zweiten äußeren Längsseite- begrenzt. Der Steg ist an einem sich im Wesentlichen entlang der Längserstreckung erstreckenden dritten und vierten Teil der Behälteraußenwandung --nämlich der Ober- und Unterseite derselben-- angeschlossen.

Nach der Erfindung weist der Steg einen Durchlass zur Bildung einer pneumatischen Verbindung der ersten und zweiten Kammer innerhalb des Trockenbehälters auf. Erfindungsgemäß ist eine Druckluftströmung über eine pneumatische Verbindung der ersten und zweiten Kammer in der ersten und der zweiten Kammer gegenläufig und entlang der Längserstreckung sowie in der pneumatischen Verbindung quer zur Längserstreckung führbar; d. h. in dem Trockenbehälter im Wesentlichen U-förmig. Im Hinblick auf die Behälteraußenwandung ist so der Strömungspfad vergleichsweise gut ausgelegt und eine Durchströmung mit Druckluft füllt den Innenraum des Trockenbehälters in verbesserter Weise aus. Die U-förmige Strömungsführung führt zu einer verbesserten Trockenraumnutzung auf vergleichsweise großer Fläche aber geringer Durchströmungstiefe in der Längserstreckung des Trockenbehälters und dennoch verlängerter Trockenbettstrecke, da die Längserstreckung des Trockenbehälters doppelt in die Trockenbettstrecke eingeht. Insbesondere sind desweiteren nicht oder nur schwach durchströmte "Totecken" oder nicht zur Trocknung genutzte Bereiche weitgehend vermieden; praktisch der gesamte Innenraum des Trockenbehälters ist zur Trocknung der Druckluftströmung nutzbar. Besonders vorteilhaft wird dies erreicht für den vorteilhaften Fall, dass das Trockengranulat direkt in der ersten und zweiten Kammer aufnehmbar ist. Dies kann zu einer verbesserten Trockengranulatnutzung und/oder Verringerung des Trockengranulatvolumens genutzt werden, ohne dass Einbußen bei der Trockenleistung befürchtet werden müssten.

In einer besonders bevorzugten Weiterbildung ist vorgesehen, dass die erste und zweite Kammer zur direkten Aufnahme eines Trockengranulats dienen, d. h. insbesondere ohne dass ein weiterer Behältniseinsatz oder eine Kartusche erforderlich wäre. Das Trockengranulat kann in der Weiterbildung ohne weiteren Behältniseinsatz direkt in die erste und zweite Kammer, vorzugsweise auch in eine pneumatische Verbindung der ersten und zweiten Kammer, eingebracht werden.

Diese Anordnung setzt grundsätzlich an eine Längsführung der Druckluftströmung im Trockenbehälter an, wobei die Druckluftströmung in einer ersten und zweiten Kammer gegenläufig sowie entlang der Längserstreckung führbar ist; insbesondere in etwa U-förmig führbar ist.

Im Rahmen einer besonders vorteilhaften Weiterbildung verläuft der Steg auf einer der Längserstreckung folgenden im Wesentlichen mittigen Längsachse des Trockenbehälters. Die Längsachse des Trockenbehälters ist mittig jedenfalls in einem Querschnitt des Trockenbehälters gemessen zu einer Behälteraußenwandung. Insbesondere ist in wenigstens einem Querschnitt des Trockenbehälters der Steg in der Mitte zwischen einer ersten äußeren Längsseite der Behälteraußenwandung und einer zweiten äußeren Längsseite der Behälteraußenwandung platziert. Insbesondere hat es sich im Rahmen dieser Weiterbildung als vorteilhaft erwiesen, dass die erste und zweite Kammer im Wesentlichen gleiche Kammerinnenvolumina haben. Die Weiterbildung erweist sich als besonders kompakt und druckverlustbegrenzt bei dennoch verlängertem Trocknerbett und insoweit verbesserter Trocknung.

Bevorzug ist eine erste Kammerachse der ersten Kammer und eine zweite Kammerachse der zweiten Kammer neben und im Wesentlichen parallel zu dem Steg des Trockenbehälters verlaufend angeordnet. Ein insoweit gleich orientierter Kammerverlauf führt zu einem besonders kompakten Trockenbehälter mit begrenztem Druckverlust. Insbesondere hat es sich als vorteilhaft erwiesen eine erste Kammerachse und eine zweite Kammerachse gleich beabstandet vom Steg anzuordnen. Des Weiteren hat es sich als vorteilhaft erwiesen, dass die erste und die zweite Kammer einen gleichen lichten Querschnitt eines Strömungspfades für die Druckluftströmung aufweisen. Insbesondere hat es sich als vorteilhaft erwiesen, dass die erste und die zweite Kammer eine weitgehend gleiche geometrische Form und Abmessung ausbilden. Beispielsweise kann die erste und die zweite Kammer jeweils als eine einströmige Röhre gebildet sein. Der lichte Querschnitt der ersten und/oder zweiten Kammer ist vorteilhaft ein kreisförmiger oder elliptischer lichter Querschnitt.

Es hat sich gezeigt, dass ein Trockenbehälter nach dem Konzept der Erfindung auch die Basis für eine bauraumsparende formgebende Anpassung desselben an Bauraumerfordernisse bietet, z. B. lässt sich ein Trockenbehälter gut an die Bauform eines Motors und Verdichters einer Druckluftversorgungsanlage anpassen. Ein vorliegender Trockenbehälter mit einem auf eine erste und zweite Kammer aufgeteilten Innenvolumen ist --bei dennoch gewährleisteter Druckbeständigkeit-- hinsichtlich seiner Außenabmessung besser an eine Umgebung anpassbar als ein Trockenbehälter mit einer einzigen Kammer und gleichem Innenvolumen. Vorteilhaft lassen sich beispielsweise die erste und zweite Kammer gleichgerichtet und im Wesentlichen gleich geformt ausbilden; z. B. jeweils zylindrisch mit kreisförmigem oder elliptischem Querschnitt. Querschnittdurchmesser der ersten und zweiten Kammer können entlang einer die Querschnittdurchmesser enthaltenden Geraden angeordnet sein; in einer Abwandlung lassen sich die Querschnittdurchmesser der ersten und zweiten Kammer auf unterschiedlichen zueinander abgewinkelten Schenkeln eines Winkels anordnen. In einer weiteren Abwandlung lassen sich die erste und zweite Kammer im Wesentlichen gleich geformt aber entlang winklig oder schief zueinander stehenden Kammerachsen unterschiedlich ausrichten. In einer anderen Abwandlung kann die erste und zweite Kammer auch unterschiedlich geformt sein.

Bevorzugt weist die erste Kammer einen ersten lichten Querschnitt und die zweite Kamme einen zweiten lichten Querschnitt eines Strömungspfades für die Druckluftströmung auf, wobei der erste lichte Querschnitt und der zweite lichte Querschnitt längs der Längserstreckung gleich groß sind; insbesondere sind die erste und die zweite Kammer mit weitgehend gleicher geometrischer Form und Abmessung ausgebildet. Es hat sich gezeigt, dass die lichten Querschnitte vergleichsweise klein ausgelegt werden können, was vorteilhaft zu einem geringeren Materialaufwand führt. In einer anderen Weiterbildung kann die erste Kammer einen ersten lichten Querschnitt und die zweite Kammer einen zweiten lichten Querschnitt eines Strömungspfades für die Druckluftströmung aufweisen, wobei sich der erste lichte Querschnitt und/oder der zweite lichte Querschnitt längs der Längserstreckung verändern, insbesondere sich in Form und/oder Größe verändern.

Im Rahmen einer auch anhand des Ausführungsbeispiels erläuterten besonders bevorzugten Weiterbildung ist der Innenraum des Trockenbehälters durch genau einen Steg in genau zwei, nämlich die erste Kammer und die zweite Kammer geteilt. Gemäß der vorgenannten Weiterbildung hat die erste und zweite Kammer zusammen einen besonders geeigneten in etwa 8-förmigen Strömungsquerschnitt für eine Druckluftströmung am Eintritt des Trockenbehälters; dieser Strömungsquerschnitt ist in verbesserter Weise abdichtbar, z. B. durch eine Formdichtung. Es hat sich gezeigt, dass insbesondere bei einer zuvor erwähnten Form eines Strömungsquerschnitts, die Temperaturverhältnisse der Druckluftströmung in bevorzugter Weise vergleichmäßigt sind; bzw. bei Bedarf eine Vorkühlung von Einströmluft in verbesserter Weise umsetzbar ist.

Die erste und zweite Kammer sind besonders bevorzugt einstückig mit der Behälteraußenwandung und dem Steg des Trockenbehälters gebildet. Die einstückige Ausbildung mit der Behälteraußenwandung und dem Steg des Trockenbehälters erhöht die Stabilität des Trockenbehälters. Eine Kartusche oder dergleichen weiterer Behälter zur Aufnahme von Trockengranulat ist nicht erforderlich; das Trockengranulat kann direkt in den Trockenbehälter eingebracht werden. Dies vermindert den Teileaufwand und verbessert das Druckhaltevermögen. Insbesondere ist eine Auslegung hinsichtlich eines Druckhaltevermögens des Trockenbehälters erheblich verbessert; dies gilt insbesondere hinsichtlich des gewährleisteten Betriebsdrucks und/oder Berstdrucks. Insbesondere hat sich gezeigt, dass aufgrund der Auslegung mit einer ersten und zweiten Kammer bei gleichen Druckanforderungen eine Wandstärke des Trockenbehälters im Vergleich zu einem Trockenbehälter mit nur einer Kammer vergleichsweise gering gehalten werden kann, insbesondere verringert werden kann, jedenfalls nicht erhöht werden müsste. Ein auf dem Konzept der Erfindung aufbauender Trockenbehälter ist für einen Betriebsdruck von bis zu 30 bar ausgelegt. Insbesondere ist ein solcher Trockenbehälter für einen Betriebsdruck von bis zu 40 bar ausgelegt. Ein Berstdruck eines Trockenbehälters weist vorteilhaft die Höhe eines 1,5-fachen, insbesondere wenigstens eines 2.5-fachen Betriebsdrucks auf. Die Wandstärke liegt bevorzugt unterhalb 4mm, insbesondere unterhalb 3.5 mm. Es hat sich gezeigt, dass in einer besonders bevorzugten Weiterbildung der Trockenbehälter mit einer Wandstärke in einem Bereich von 3 mm oder ggfs. darunter ausgeführt werden kann, wobei ein Betriebsdruck von bis zu 30 bar und ein Berstdruck bei einem 2.5-fachen des Betriebsdrucks erreichbar ist. Auch die Abdichtung des Trockenbehälters kann aufgrund seiner weitergebildeten Form auf einen höheren Betriebsdruck ausgelegt werden. Die erhöhte Berstdruckgrenze führt zu einer höheren Betriebssicherheit. Damit eignet sich ein Trockenbehälter dieser Art besonders bevorzugt zur Realisierung einer Druckluftversorgungsanlage bei einem Fahrzeug wie einem PKW, insbesondere eine SUV, bei dem höhere Betriebsdrücke gewünscht sind.

Im Rahmen einer pneumatischen schaltungstechnischen Implementierung der Druckluftversorgungsanlage ist erfindungsgemäß die erste und die zweite Kammer zur Bildung einer ersten und zweiten Lufttrocknerstufe der Lufttrockneranordnung in einer Reihenschaltung in der Pneumatikhauptleitung pneumatisch verbunden. Nach der Erfindung ist die erste und die zweite Lufttrocknerstufe nur über eine pneumatische Verbindung innerhalb des Trockenbehälters zur Führung der Druckluftströmung pneumatisch verbunden. Auch dies führt zu einer kompakten Auslegung und erhöht die Betriebsdrucksicherheit des Trockenbehälters. Beispielsweise kann die pneumatische Verbindung zwischen der ersten und zweiten Kammer mittels eines Durchlasses des Steges gebildet sein. Vorteilhaft ist damit die erste Kammer zunächst entlang einer länglichen ersten Kammerachse durchströmbar, anschließend die pneumatische Verbindung und danach die zweite Kammer entlang der zweiten Kammer in Gegenrichtung entlang der länglichen zweiten Kammerachse durchströmbar. Insbesondere führt diese Weiterbildung dazu, dass die erste und die zweite Kammer pneumatisch kommunizieren und zur Bildung eines U-förmigen Strömungspfades für die Druckluftströmung pneumatisch verbunden sind.

Es hat sich als besonders bevorzugt erwiesen, dass die Behälteraußenwandung des Trockenbehälters außerdem einen pneumatischen Zwischenanschluss aufweist, der bevorzugt auf gleicher Längsposition entlang einer Längserstreckung des Trockenbehälters wie die pneumatische Verbindung (z. B. ein Durchlass in einem Steg) angeordnet ist. Bevorzugt ist die pneumatische Verbindung und der Zwischenanschluss in Kombination im Rahmen eines Querkerns gebildet, der die Behälteraußenwandung des Trockenbehälters entlang einer Verbindungsebene gegenüber einer Anschlussseite des Trockenbehälters erweitert. Der pneumatische Zwischenanschluss kann druckverschlossen sein. Insbesondere kann der pneumatische Zwischenanschluss ausgebildet sein, ein pneumatisches Element anzuschließen. Unter einem "pneumatischen" Merkmal (z. B. einem pneumatischen Element) ist vorliegend ein zur Druckluftführung geeignetes Merkmal (Element) zu verstehen; beispielsweise ist unter einer pneumatischen Verbindung eine zur Führung der Druckluftströmung geeignete Verbindung, wie eine Pneumatikleitung oder ein zur Führung der Druckluftströmung geeigneter Durchlass oder dgl. "pneumatisches" Merkmal zu verstehen. Unter einer pneumatischen Verbindung mit einem pneumatischen Element ist gemäß dem Konzept der Erfindung eine über eine bloße pneumatische Verbindung der ersten und zweiten Teilleitung hinausgehende pneumatische Verbindung zu verstehen, die aufgrund des zur Druckluftführung geeigneten (pneumatischen) Elements eine erweiterte pneumatische Funktionalität zur Beeinflussung der Druckluftströmung aufweist. Das pneumatische Element kann insbesondere als ein oben genannter pneumatischer Zwischenanschluss, insbesondere --zusätzlich oder alternativbeispielsweise in Form einer Drossel, einer Düse, in Form eines Ventil oder dgl. pneumatischen Elements realisiert sein, wie dies in den weiteren Unteransprüchen ausgeführt ist. Beispielsweise kann das pneumatische Element eine Drossel oder ein Wasserabscheider oder dergleichen von einer Druckluftströmung durchströmbares pneumatisches Element sein. Im Rahmen einer anhand der Ausführungsform beschriebenen besonders bevorzugten Weiterbildung ist ein zusätzlicher Druckluftanschluss auf Höhe eines der ersten und der zweiten Kammer gebildeten Durchlasses im Steg angeordnet.

Die weiteren Weiterbildungen führen zu einer besonders bevorzugten kompakten Realisierung der Druckluftversorgungsanlage, in denen der Anschluss der Lufttrockneranordnung besonders bevorzugt realisiert ist.

Im Rahmen einer besonders bevorzugten Weiterbildung ist vorgesehen, dass ein erster und zweiter Anschluss der Pneumatikhauptleitung auf einer Anschlussseite des Trockenbehälters gebildet ist, wobei der erste Anschluss zur ersten Kammer und der zweite Anschluss zur zweiten Kammer gebildet sind. Die Lufttrockneranordnung lässt sich so modular und einfach auswechseln bzw. in der Herstellung einfach assemblierbar an den anderen Teilen der Druckluftversorgungsanlage anbringen. Besonders bevorzugt ist der erste und zweite Anschluss der Pneumatikhauptleitung auf einer der vorgenannten pneumatischen Verbindung gegenüberliegenden Anschlussseite des Trockenbehälters gebildet.

Im Rahmen einer besonders bevorzugten Weiterbildung ist vorgesehen, dass eine Anschlussseite des Trockenbehälters einen für die erste Kammer und für die zweite Kammer gemeinsamen Anschlussflansch aufweist. Dieser kann besonders für hohe Betriebsdrücke ausgelegt sein. Vorzugsweise weist der Anschlussflansch eine erste, der ersten Kammer zugeordnete Öffnung und eine zweite, der zweiten Kammer zugeordnete Öffnung auf. Der Anschlussflansch ist somit konstruktiv auf den Trockenbehälter ausgelegt. Im Rahmen einer besonders bevorzugten konstruktiven Weiterbildung ist die erste Öffnung und die zweite Öffnung durch einen dem Steg zugeordneten Flanschsteg getrennt.

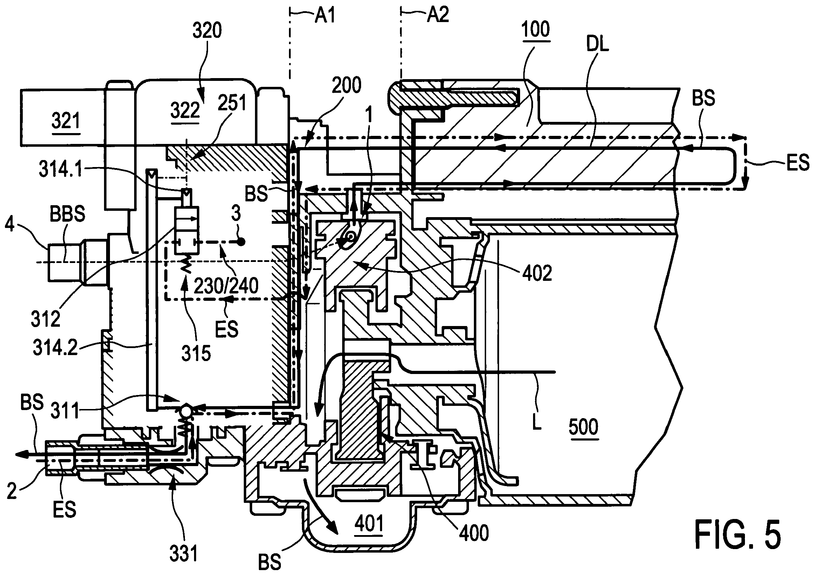

Bei der angeschlossenen Lufttrockneranordnung ist im Rahmen einer besonders bevorzugten Weiterbildung der Druckluftversorgungsanlage mittels der Ventilanordnung auf einer Anschlussseite des Trockenbehälters ein erster Anschluss der Pneumatikhauptleitung zur ersten Kammer und zu einer Druckluftzuführung und/oder einem Entlüftungsanschluss schaltbar; zu einer Druckluftzuführung beispielsweise im Rahmen eines Füllbetriebs oder Füll-Boost-Betriebs, wie er im Rahmen einer beispielhaften besonders bevorzugten Ausführungsform der Fig. 5 beschrieben ist; zu einem Entlüftungsanschluss wie er beispielsweise im Rahmen eines beispielhaften besonders bevorzugten Betriebsmodus eines Entlüftungsbetriebs der Fig. 5 beschrieben ist.

Besonders bevorzugt ist mittels der Ventilanordnung auf einer Anschlussseite des Trockenbehälters ein zweiter Anschluss zur zweiten Kammer und zu einem Druckluftanschluss zur Pneumatikanlage schaltbar. Beispielhaft ist ein entsprechender Betriebsfüllmodus anhand einer Ausführungsform der Fig. 5 beschrieben.

Bevorzugt liegt eine Anschlussseite des Trockenbehälters einer Anschlussebene zwischen der Ventilanordnung und einem Luftverdichter gegenüber; insbesondere sind diese über einen Anschlussabstand voneinander getrennt. Insbesondere hat es sich als vorteilhaft erwiesen, dass die Anschlussseite und die Anschlussebene mittels des Luftverdichters beabstandet sind. Im Rahmen einer besonders bevorzugten Weiterbildung kann ein Abschnitt der Pneumatikhauptleitung zwischen der Anschlussseite des Trockenbehälter und der Ventilanordnung in der Anschlussebene verlaufen. Dies führt zu einer besonders bauraumsparenden Unterbringung der Pneumatikhauptleitung sowie einer leichten Assemblierbarkeit der Druckluftversorgungsanlage. Dazu hat es sich als besonders vorteilhaft erwiesen, einen Motor und einen Luftverdichter vorzusehen, wobei der Motor und der Luftverdichter in Baueinheit mit der Pneumatikhauptleitung und der Lufttrockneranordnung sowie der Ventilanordnung gebildet sind. Der Motor der Luftverdichter- und die Lufttrockneranordnung können so auf einer Seite der Anschlussebene und die Ventilanordnung auf einer anderen Seite der Anschlussebene zur Verfügung stellbar sein und dann modular in der Anschlussebene assemblierbar sein. Eine Schnittstellenausführung in der Anschlussebene führt dazu, dass bei Assemblierung der Abschnitt der Pneumatikhauptleitung zwischen dem Trockenbehälter und der Ventilanordnung in der Anschlussebene gebildet wird. Beispielsweise kann dazu in der Anschlussebene eine geeignete Formdichtung oder dergleichen Vorgabe für den Abschnitt der Pneumatikhauptleitung gegeben sein. Es lassen sich mittels der modularen Bauweise vorteilhaft für eine Version einer Grundausstattung einer Druckluftversorgungsanlageumfassend Motor, Luftverdichter und Ventilanordnung- unterschiedliche Versionen von Lufttrockneranordnungen mit insbesondere bauraumangepassten Trockenbehältern vorgeben. Damit kann eine höhere Anzahl von angepassten Varianten einer Druckluftversorgungsanlage zur Verfügung gestellt werden ohne, dass die Bauteilezahl übermäßig erhöht wäre. Es ergibt sich eine Montageoptimierung bei der Herstellung sowie Kosten- und Gewichtsvorteile.

Im Rahmen einer auch anhand der Ausführungsform im Einzelnen beschriebenen besonders bevorzugten Weiterbildung ist für die Druckluftversorgungsanlage eine modular assemblierbare Baueinheit vorgesehen mit:
- der Lufttrockneranordnung sowie der Ventilanordnung,
- einem Motor und einem Luftverdichter, insbesondere einen zweistufigen Luftverdichter, wobei der Motor und der Luftverdichter in der Baueinheit mit wenigstens einem Teil der Pneumatikhauptleitung gebildet sind, und wobei
- der Motor und die Lufttrockneranordnung einerseits und die Ventilanordnung anderseits des Luftverdichters modular assemblierbar sind, insbesondere unter Bildung des wenigstens eines Teils der Pneumatikhauptleitung in der Anschlussebene zwischen dem Trockenbehälter und der Ventilanordnung.

Der modulare Aufbau ermöglicht eine Trennung von Trocknerfunktion am Trockenbehälter einerseits und Steuer- bzw. Luftverteilungsfunktion in der Ventilanordnung bzw. der Anschlussebene andererseits. Vorteilhaft sind bei der Ventilanordnung Steuerkolben- und Magnetankerachsen der Ventile parallel zur Anschlussebene, d. h. zur Luftverteilungsebene ausgerichtet. Dies hat neben Funktionsvorteilen auch den Vorteil, dass Steuer- und Trocknerfunktion nicht mehr die Breite des Gesamtaggregats der Druckluftversorgungsanlage vorgeben; vielmehr kann diese vergleichsweise flach und beidseitig am Fahrzeug befestigbar ausgeführt werden.

Der vorgenannte konkrete modulare Aufbau hat auch den Vorteil, dass die Ventilanordnung nah am Luftverdichter sitzt, d. h. die Luftverteilungsfunktion ist im Warmbereich des Luftverdichters angeordnet. Abwärme desselben unterstützt somit auch einen verlässlichen Betrieb der Ventilanordnung bei sehr niedrigen Außentemperaturen, von z. B. bis zu -40°C.

Insbesondere ist die Baueinheit aus einer Gehäuseanordnung gebildet, die zum einen eine Ventilanordnung und zum anderen einen Luftverdichter, einen Motor und den Trockenbehälter aufweist, der eine erste Kammerachse und eine zweite Kammerachse und eine Anschlussseite hat, die von einer Anschlussebene der Ventilanordnung über einen Anschlussabstand beabstandet ist.

Bevorzugt ist im Anschlussabstand zwischen der Anschlussseite und der Anschlussebene der Luftverdichter angeordnet, und der Motor erstreckt sich parallel der ersten und zweiten Kammerachsen des Trockenbehälters und gegenüberliegend der Ventilanordnung. Der Monoblock des Luftverdichters erlaubt vorteilhaft eine sichere und stabile Anbringung der Funktionsgruppen Ventilanordnung, Trockenbehälter und Motor.

Anders ausgedrückt kann die Baueinheit aus Luftverdichter, Motor und Trockenbehälter eine in etwa U-förmige Gehäuseanordnung mit einem ersten und zweiten Schenkel und einer Basis bilden. Diese in etwa U-förmige Gehäuseanordnung sieht vor, dass der Motor sich entlang des ersten und der Trockenbehälter sich entlang des zweiten Schenkels und der Luftverdichter sich entlang der Basis erstreckt. Vorteilhaft ist darüberhinaus vorgesehen, dass die Ventilanordnung auf einer den Schenkeln gegenüberliegenden Seite der Basis angeordnet ist. Insofern erstreckt sich eine vorgenannte Anschlussebene im Wesentlichen entlang der Basis. Diese Anordnung ist besonders kompakt und einfach aufgebaut sowie leicht assemblierbar. Außerdem lassen sich die Einzelkomponenten der Baueinheit --d. h. Luftverdichter, Motor, Trockenbehälter und Ventilanordnung-- separat bedarfsgerecht auslegen, fertigen oder zukaufen und modular ergänzen bzw. austauschen.

Im Rahmen einer U-förmigen Gehäuseanordnung lässt sich auch eine oben beschriebene vorteilhafte doppelzylinderartige Form des Trockenbehälters gut an eine zylindrische Motorbauform anpassen; insbesondere können oben genannte Querschnitte der ersten Kammer und der zweiten Kammer winklig zueinander angeordnet sein, um mit der Außenkontur des Trockenbehälters möglichst einer Außenkontur des Motors zu folgen. Außerdem lassen sich Zwischenräume für Anschlüsse oder andere Komponenten nutzen.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung und der Zeichnung offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung und/oder Zeichnung offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar sein. Weitere Vorteile, Merkmale und Einzelheiten der Erfindung ergeben sich aus der nachfolgenden Beschreibung der bevorzugten Ausführungsbeispiele sowie anhand der Zeichnung. Für identische oder ähnliche Merkmale oder Merkmale identischer oder ähnlicher Funktion sind vorliegend der Übersichtlichkeit halber gleiche Bezugszeichen verwendet.

Im Einzelnen zeigt die Zeichnung in
- Fig. 1:: eine perspektivische Ansicht einer Druckluftversorgungsanlage gemäß einer besonders bevorzugten Ausführungsform mit einer Gehäuseanordnung von Lufttrockneranordnung, Motor, Luftverdichter und Ventilanordnung zur Bildung einer modularen Baueinheit - in Ansicht (A) als Gesamtansicht, in Ansicht (B) nur die funktional besonders wichtige Lufttrockneranordnung und Ventilanordnung;
- Fig. 2:: eine Zusammenstellung von Schnittansichten (A), (B), (C) der Druckluftversorgungsanlage der Fig. 1 mit einem Motor, einem Luftverdichter, einer Ventilanordnung und einer Lufttrockneranordnung gemäß der besonders bevorzugten Ausführungsform;
- Fig. 3:: die Lufttrockneranordnung der Fig. 2 in einer Anzahl von perspektivischen Ansichten (A), (B), (C) mit einem Trockenbehälter mit zwei Kammern, dies in leichter Abwandlung der Lufttrockneranordnung der Fig. 2 hinsichtlich der pneumatischen Verbindung der zwei Kammern;
- Fig. 4:: eine Schaltungsdiagramm für eine besonders bevorzugte Druckluftversorgungsanlage aufweisend eine Ventilanordnung mit einem entsperrbaren Rückschlagventil und einem Entlüftungsventil, das über ein steuerbares Magnetventil schaltbar ist;
- Fig. 5:: die Druckluftversorgungsanlage der Fig. 2 in einem Ausschnitt der Anschlussebene zwischen Luftverdichter und Ventilanordnung, wobei die Führung einer Druckluftströmung bei einem Füllbetrieb (durchgezogene Volllinie), einem Füll-Boost-Betrieb (gestrichelte Linie) und einem Entlüftungsbetrieb (strichpunktierte Linie) einer Pneumatikanlage der Fig. 4 gezeigt ist.

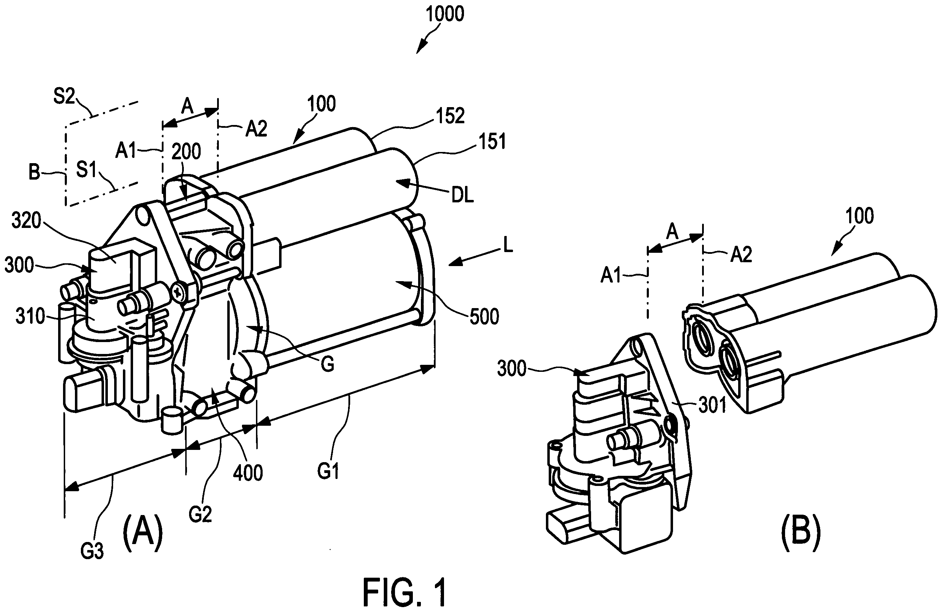

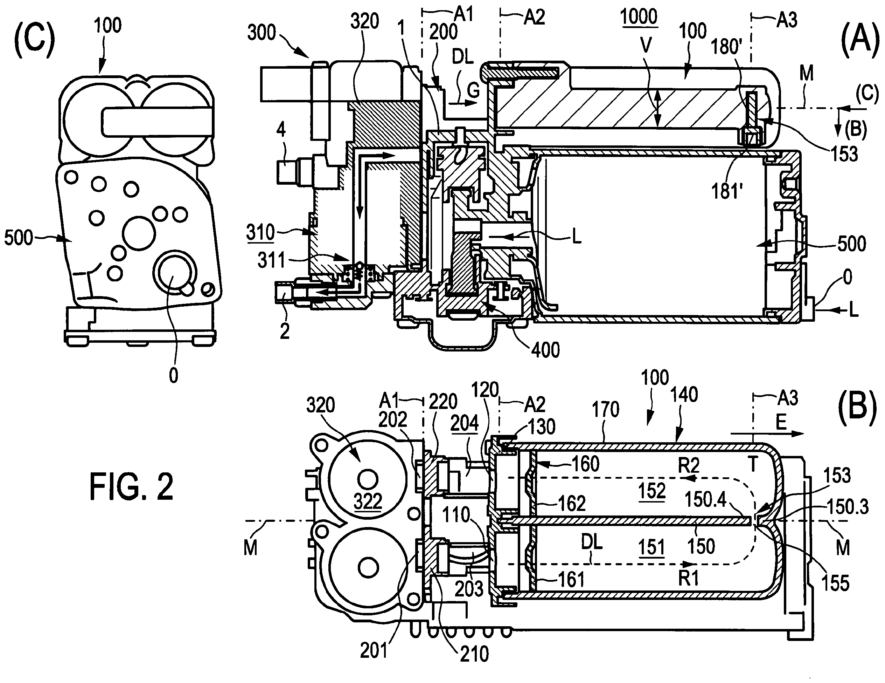

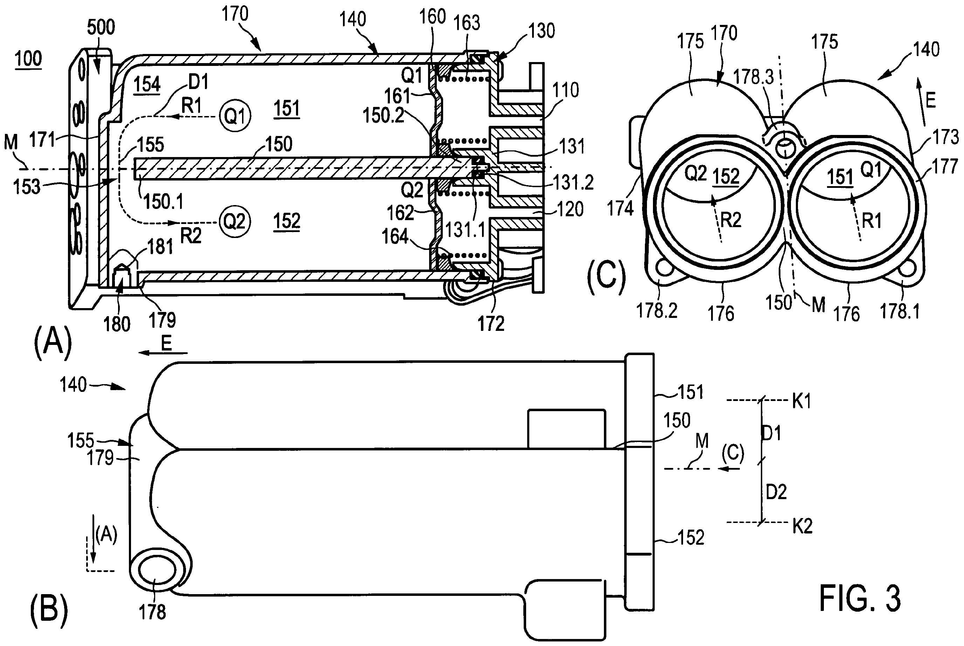

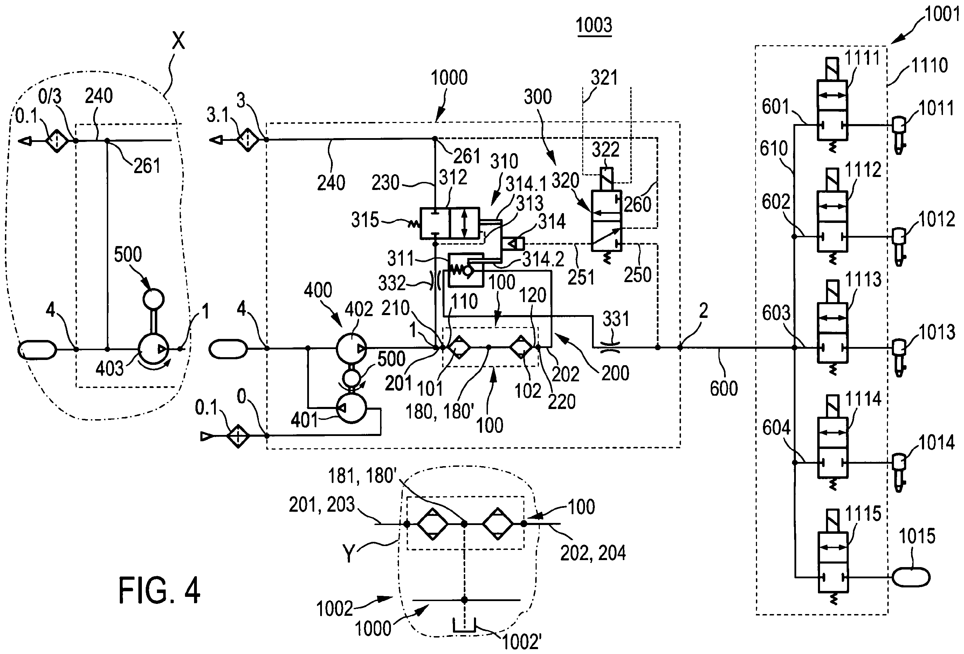

Fig. 1 zeigt perspektivisch in Ansicht (A) eine Druckluftversorgungsanlage 1000, die vorliegend zur Versorgung einer Pneumatikanlage 1001 in Form einer Luftfederanlage eines PKW-Fahrzeugs ausgelegt ist - die Pneumatikanlage 1001 ist weiter anhand von Fig. 3 erläutert. Zunächst insgesamt bezugnehmend auf Fig. 1 weist die Druckluftversorgungsanlage 1000 einen Motor 500 zum Antrieb eines Luftverdichters 400 auf, wobei der Luftverdichter vorliegend als ein Doppelverdichter gebildet ist. Zu verdichtende Luft L wird dem Luftverdichter 400 am Motor 500 vorbei zugeführt und von dort einer in Fig.2(A) näher, hier lediglich symbolisch, gezeigten Pneumatikhauptleitung 200 als Druckluft zugeführt; nämlich insbesondere zunächst einem in Fig.2(B) gezeigten ersten Teil 201 einer Pneumatikhauptleitung 200. Ebenfalls angeschlossen an die Pneumatikhauptleitung 200 ist eine Lufttrockneranordnung 100, die zur Trocknung der Druckluft DL in einem näher anhand von Fig. 2 erläuterten Trocknerbett dient, das direkt in den Kammern 151, 152 der Lufttrockneranordnung 100 gebildet ist. Wie in den Fig. 4 bis Fig. 5 näher dargestellt ist, verbindet die Pneumatikhauptleitung 200 insgesamt eine Druckluftzuführung 1 von dem Luftverdichter 400 zu einem Druckluftanschluss 2 zu einer Galerie der Pneumatikanlage. In der Pneumatikhauptleitung 200-nämlich anschließend an einen in Fig. 2(B) näher gezeigten zweiten Teil 202 derselben von der Lufttrockneranordnung 100-- ist auch eine lediglich symbolisch dargestellte Ventilanordnung 300 pneumatisch angeschlossen. Die Ventilanordnung 300 weist vorliegend eine schaltbare Wegeventilanordnung 310 auf, die über ein Magnetventil 320 schaltbar ist.

Insgesamt ist die Druckluftversorgungsanlage 1000 mit einem Motor 500 und einem zweistufigen Luftverdichter 400 gebildet, die in Baueinheit mit der Lufttrockneranordnung 100 und der Ventilanordnung 300 sowie der Pneumatikhauptleitung 200 modular assemblierbar sind. Wie im Einzelnen aus Fig. 1(A) ersichtlich ist, wird eine Gehäuseanordnung mit dem Motor 500 und dem Verdichter 400 zur Verfügung gestellt, wobei der Verdichter 400 als zentraler Monoblock dient. Wie in Fig. 1(B) verdeutlicht ist an diese Gehäuseanordnung die Lufttrockneranordnung 100 und die Ventilanordnung 300 auf gegenüberliegenden Seiten anbringbar. Insbesondere ist die Lufttrockneranordnung 100 und die Ventilanordnung 300 auswechselbar an die Gehäuseanordnung anbringbar. Die aus Fig. 1(A) erkennbare Gehäuseanordnung G ist zum einen mit dem Motor 500, dem Luftverdichter 400 und der Lufttrockneranordnung 100 in etwa U-förmig aufgebaut und weist dazu einen in Fig. 1(A) symbolisch bezeichneten ersten Schenkel S1, einen zweiten Schenkel S2 und eine Basis B auf. Der Motor erstreckt sich entlang des ersten Schenkels S1 im Gehäuseabschnitt G1, der Luftverdichter 400 erstreckt sich entlang der Basis B im Gehäuseabschnitt G2 und die Lufttrockneranordnung 100 erstreckt sich entlang des zweiten Schenkels S2 im Gehäuseabschnitt G1. Die Ventilanordnung 300 ist dagegen auf einer dem ersten und zweiten Schenkel S1, S2 gegenüberliegenden Seite der Basis B im Gehäuseabschnitt G3 angeordnet. Die Gehäuseanordnung G weist eine der Ventilanordnung 300 zugewandte Anschlussebene A1 auf, an welche die Ventilanordnung 300 modular anbringbar ist. Die Gehäuseanordnung G weist eine der Luftrockneranordnung 100 zugewandte Anschlussseite A2 auf, an welche die Luftrockneranordnung 100 modular anbringbar ist. Die Anschlussebene A1 und die Anschlussseite A2 sind über einen Anschlussabstand A voneinander beabstandet, wobei der Monoblock des Luftverdichters 400 größtenteils in dem Anschlussabstand A untergebracht ist.

Aufgrund der modularen Anordnung der vorgenannten Komponenten --insbesondere wie aus Fig. 1(B) ersichtlich-- der Lufttrockneranordnung 100 und der Ventilanordnung 300 sind die Funktionalitäten der Trocknerfunktion einerseits und der Druckluftsteuerfunktion andererseits räumlich getrennt. Die Funktionalitäten lassen sich einzeln bedarfsgerecht auslegen und gegebenenfalls auswechseln und separat durch Auswechseln ändern. Die Anordnung der Ventilanordnung (Druckluftsteuerfunktionalität) am Luftverdichter 400 hat den Vorteil, dass Abschlussdeckel und zugehörige Befestigungs- und Dichtelemente zum Verschließen einer Montageöffnung am Luftverdichter als separate Elemente entfallen können. Vielmehr lassen sich diese im Rahmen eines Flansches, vorliegend der Ventilanordnung 300 realisieren, nämlich indem die vorgenannten ersten und zweiten Teile der 201, 202 der Pneumatikhauptleitung 200 in dem Flansch 301 der Ventilanordnung 300 mit einer geeigneten Formdichtung untergebracht sind. Diese Integration im Monoblock der Ventilanordnung 300, in einer Abwandlung auch des Luftverdichters 400, führt auch zu einer Senkung der Strömungsgeräusche und einer Reduzierung des Montageaufwands. Darüber hinaus ist der Schwerpunkt der Druckluftversorgungsanlage 1000 am Monoblock des Luftverdichters 400 gebildet; insofern ist die Schwerpunktlage weitgehend mittig im Gesamtaggregat und führt zu einer besseren Gewichtsverteilung.

Die Bildung wenigstens eines Teils der Pneumatikhauptleitung 200 in der Anschlussebene führt zu einer vorteilhaften Luftverteilung sowohl für den Luftverdichter 400 als auch für die Lufttrockneranordnung 100. Außerdem können Luftkanäle zur Befüllung und/oder Entlüftung der Ventilanordnung 300 von der Anschlussebene A1 bzw. der Anschlussseite A2 abgeleitet werden. Dies reduziert die Anzahl und Länge der pneumatischen Leitungen.

Insbesondere lässt sich der Luftverdichter 400 in besonders vorteilhafter Weise als zweistufiger Luftverdichter ausbilden. Die erforderliche pneumatische Verbindung einer ersten Verdichterstufe zu einer zweiten Verdichterstufe eines zweistufigen Verdichters lassen sich unter anderem jedenfalls teilweise in dem vorgenannten Flansch 301 unterbringen. Die Luftführungen durch das Gehäuse der Ventilanordnung 300 lassen sich vergleichsweise einfach zum Flansch 301 und damit an die pneumatische Verbindung zwischen der ersten und zweiten Verdichterstufe anbinden. Der Flansch 301 kann auch mit einer Kühlfunktion versehen werden, so dass bereits die konstruktive Ausgestaltung der Flanschanbindung von Ventilanordnung und Luftverdichter 400 im Hinblick auf die Kompressorfunktion, insbesondere im Hinblick auf eine zweistufige Kompressorfunktion angepasst werden kann.

Aufgrund der vorteilhaft möglichen Führung eines Entlüftungsweges in den Monoblock des Luftverdichters 400 und/oder Motors 500 wird eine besonders großzügige und geräuscharme Entspannung des Entlüftungsvolumens möglich.

Fig. 2 zeigt die Druckluftversorgungsanlage 1000 der Fig. 1 in einer seitlichen Schnittansicht (A), einer oberseitigen Schnittansicht (B) und einer Kopfansicht (C).

Zunächst zeigt Fig.2(A), dass an die Pneumatikhauptleitung 200 auch eine in den Fig. 4 bis Fig. 5 näher dargestellte Zweigleitung zu einem Entlüftungsanschluss 3 als auch eine dort näher dargestellte Speicherleitung zu einem Speicheranschluss 4 angeschlossen ist. Über den Entlüftungsanschluss 3 kann die Pneumatikanlage 1001 über die Pneumatikhauptleitung 200 der Lufttrockneranordnung 100 entlüftet werden.

Wie aus Fig. 2(C) ersichtlich ist, wird Luft L über eine Ansaugung 0 durch den Bauraum des Motors 500 dem Luftverdichter 400 zugeführt. Es kann auch über den Speicheranschluss 4 der Pneumatikhauptleitung 200 --und darüber dem Druckluftanschluss 2 zur Pneumatikanlage 1001-- schnell verfügbare Druckluft aus einem nicht näher dargestellten Speicher zugeführt werden, ohne dass der Luftverdichter 400 betätigt werden muss.

Wie auch aus Fig. 2(A) ersichtlich ist, sind in der Anschlussebene A1 der Gehäuseanordnung G geeignete Leitungskanäle zur Bildung der Pneumatikhauptleitung 200 eingebracht, so dass --unter Schließen derselben bei Anbringung der Ventilanordnung 300 auf der Anschlussebene A1-- die Pneumatikhauptleitung 200 wenigstens teilweise gebildet wird. Gegenüber der Anschlussebene A1 zwischen der Ventilanordnung 300 und dem Luftverdichter 200 liegt eine Anschlussseite A2 der Lufttrockneranordnung 100, wobei die Anschlussseite A2 der Lufttrockneranordnung 100 und die Anschlussebene A1 der Gehäuseanordnung G zwischen dem Luftverdichter 400 und der Ventilanordnung 300 in etwa durch den Luftverdichter 400 beabstandet sind.

Wie aus Fig. 2(B) weiter ersichtlich ist, sind geeignete Leitungskanäle zur Bildung der Pneumatikhauptleitung 200, nämlich hier die erste und zweite Teilleitung 201, 202, in der Anschlussebene A1 eingebracht. Die Pneumatikhauptleitung 200 weist --in etwa an der Anschlussebene A1-- einen ersten Anschluss 210 und einen zweiten Anschluss 220 auf. Der erste Anschluss 210 der Pneumatikhauptleitung 200 ist im Wesentlichen stromabwärts der Druckluftzuführung 1 gebildet und dient zur Verbindung mit einer ersten Öffnung 110 eines Anschlussflansches 130 der Lufttrockneranordnung 100. Der erste Anschluss 210 der Pneumatikhauptleitung 200 kann auch zu einem vorerwähnten Entlüftungsanschluss 3 oder wahlweise zu einem vorerwähnten Speicheranschluss 4 schaltbar sein; dies mittels der Ventilanordnung 300. Der zweite Anschluss 220 der Pneumatikhauptleitung 200 ist zu einem vorerwähnten Druckluftanschluss 2 mittels der Ventilanordnung 300 schaltbar. Andererseits ist der zweite Anschluss 220 der Pneumatikhauptleitung 200 mit einer zweiten Öffnung 120 in dem Anschlussflansch 130 der Lufttrockneranordnung 100 verbindbar.

Die Lufttrockneranordnung 100 weist neben dem Anschlussflansch 130 einen Trockenbehälter 140 mit einer ersten Kammer 151 und einer zweiten Kammer 152 auf. Konkret ist ein erster und ein zweiter Anschluss 210, 220 der Pneumatikhauptleitung 200 von einer Anschlussebene A1 der Ventilanordnung 300 zu einer Anschlussseite A2 des Trockenbehälters 140 geführt, nämlich über die symbolisch dargestellten dritten und vierten Teile 203, 204 der Pneumatikhauptleitung 200. Der erste Anschluss 210 ist dabei über den dritten Teil 203 zur ersten Kammer 151 neben dem zweiten Anschluss 220 über den vierten Teil 2034 zur zweiten Kammer 152 gebildet. Am Trockenbehälter 140 liegt die Anschlussseite A2 einer Verbindungsebene A3 mit der pneumatischen Verbindung 153 der ersten und zweiten Kammer 151, 152 gegenüber.

Der Trockenbehälter 140 ist mit einer Behälteraußenwandung 160 und einem Steg 150 gebildet, wobei der Steg 150 und die Behälteraußenwandung 160 --vorliegend einstückig als ein Behältnisteil-- des Trockenbehälters 140 gebildet ist. Die erste und zweite Kammer 151, 152 dienen zur direkten Aufnahme eines Trockengranulats T, d. h. ohne dass ein weiterer Behältniseinsatz oder eine Kartusche erforderlich wäre. Das Trockengranulat T kann also ohne weiteren Behältniseinsatz direkt in die erste und zweite Kammer 151, 152 eingebracht werden. Das Trockengranulat wird über eine erste und zweite Druckplatte 161, 162 in der ersten und zweiten Kammer 151, 152 unter Andruck zusammengehalten. Aufgrund der einstückigen Behältnisbildung für den Trockenbehälter 140 mit der Behälteraußenwandung 160 und dem Steg 150 ist der Trockenbehälter vorliegend für einen vergleichsweise hohen Betriebsdruck von um die 20 bar, ggfs. bis zu 25 bar, ausgelegt, wobei der Berstdruck über dem Doppelten, in etwa beim 2.5-fachen, des Betriebsdrucks liegt. Die vergleichsweise hohe Druckbeständigkeit des Trockenbehälters 140 wird unter anderem auch durch die geometrische Form der ersten und zweiten Kammer 151, 152 unterstützt, sodass die Wandstärke des Trockenbehälters 140 dennoch bei etwa 3mm gewählt werden kann. Diese Auslegung ist selbst für Umgebungstemperaturen von 90°C sicher. In dieser Auslegung eignet sich der Trockenbehälter 140 insbesondere für einen PKW, vorzugsweise ein SUV. Grundsätzlich sind auch Auslegungen für höhere Betriebsdrücke bzw. Berstdrücke bei dennoch gleichbleibend verringerter Wandstärke unterhalb 3.5mm des Trockenbehälters 140 möglich. Die Kammern sind vorliegend jeweils im Wesentlichen als eine zylindrische Röhre gebildet, wobei deren mit der Behälteraußenwandung 160 einstückig gebildeten Außenwände am Steg 150 zusammenlaufen. Der Steg 150 teilt somit einen von der Behälteraußenwandung 160 begrenzten Innenraum zur Aufnahme des Trockengranulats T in eine erste und zweite Kammer 151, 152, was anhand von Fig. 2 näher erläutert ist.

Eine Druckluftströmung DL ist entlang eines U-förmigen Pfades mit gegenläufigen Richtungen R1 und R2 entlang der Längserstreckung E des Trockenbehälters 140 zunächst aus der ersten Öffnung 110 durch die perforierte Druckplatte 161 in die erste Kammer 151 führbar. Über eine mit einem Durchlass 155 gebildete pneumatische Verbindung 153 gelangt die Druckluftströmung DL in die zweite Kammer 152 und wird gegenläufig zur Strömungsrichtung R1 in der ersten Kammer 151 nun in einer Strömungsrichtung R2 in der zweiten Kammer 152 und dann, wiederum über eine perforierte Druckplatte 162, zur zweiten Öffnung 120 geführt. Die Druckluftströmung DL verläuft in den gegenläufigen Richtungen R1 und R2 entlang der Längserstreckung E des Trockenbehälters 140. Im Ergebnis wird die Druckluftströmung DL somit mittels der Pneumatikhauptleitung 200 --über den Abstand zwischen der Anschlussebene A1 und der Anschlussseite A2 mittels entsprechender Leitungsstücke der Pneumatikhauptleitung 200-- hin- und hergeführt; d. h. zum Einen zwischen dem ersten Anschluss 210 und der ersten Öffnung 110 und zum anderen zwischen der zweiten Öffnung 120 und dem zweiten Anschluss 220. Der Verlauf der Pneumatikhauptleitung 200 im Bereich der Anschlussebene A1 ist vorliegend in Fig. 2(B) mit entsprechenden Kanälen in dem Gehäuseteil der Ventilanordnung 300 gezeigt, wobei die Kanäle auch einen ersten und zweiten Teil 201, 202 der Pneumatikhauptleitung 200 unmittelbar in der Anschlussebene A1 bilden. Ein erster Teil 201 der Pneumatikhauptleitung 200 in der Anschlussebene A1 dient der Führung der Druckluftströmung DL von der Druckluftzuführung 1 zum ersten Anschluss 210. Ein zweiter Teil 202 der Pneumatikhauptleitung 200 in der Anschlussebene A1 dient der Führung der Druckluftströmung DL vom zweiten Anschluss 220 zur Wegeventilanordnung 310.

Bezugnehmend auf die Ansichten (A), (B), (C) der Fig. 3 zeigt diese die Lufttrockneranordnung 100 mit dem vorerwähnten Trockenbehälter 140, dem Anschlussflansch 130 an die Pneumatikhauptleitung 200 sowie der Druckplattenanordnung 160 mit erster und zweiter perforierter Druckplatte 161, 162 zum Zusammenhalten des nicht näher dargestellten Trockengranulats. Die erste und zweite Druckplatte 161, 162 wird jeweils über eine Druckfeder 163, 164 zwischen Anschlussflansch 130 und der Druckplattenanordnung 160 unter Andruck gehalten.

Der von der Behälteraußenwandung 160 begrenzte Innenraum 154 ist mittels einem teilenden Steg 150 in eine erste und zweite Kammer 151, 152 geteilt; der Steg 150 endet mit einem ersten Ende 150.1 unter Belassen eines Durchlasses 155 vor einer Kopfseite 171 der Behälteraußenwand 170 unter Bildung der pneumatischen Verbindung 180, so dass die Druckluftströmung DL --wie eingezeichnet über Strömungsumkehr im Wesentlichen U-förmig-- von der ersten Kammer 151 zur zweiten Kammer 152 geführt werden kann. Die andere Seite 150.2 des Stegs 150 ist mit einer Feder 131.1 in einer Nut 131.2 des Anschlussflansches 130 eingelassen. Im Übrigen ist der Anschlussflansch 130 über innenseitige Anschläge innenseitig der Behälteraußenwandung 170 gehalten. Somit ist der Anschlussflansch 130 auf einer Kopfseite 172 der Behälteraußenwandung 170 umfänglich und durch das zweite Stegende 150.2 mittig gehalten. Konkret weist der Anschlussflansch 130 eine erste Öffnung 110 und eine zweite Öffnung 120 auf und ist zwischen diesen bei einer Nut 131.2 an einem dem Steg 150 zugeordneter Flanschsteg 131 vom zweiten Stegende 150.2 gehalten. Der Flanschsteg 131 bildet dazu eine die Nut 131.2 aus, in die eine am Stegende 150.2 ansetzende Feder 131.1 des Stegs 150 eingreift. Der Anschlussflansch 130 wiederum ist dichtend an die Pneumatikhautpleitung 200 angeschlossen, d. h. über die den ersten und zweiten Anschluss 210, 220 der Pneumatikhauptleitung 200.

Die Ansichten (B), (C) der Fig. 3 zeigen des Weiteren lediglich den Trockenbehälter 140. Der Steg 150 schließt im Wesentlichen einstückig längs einer Längserstreckung E an die Behälteraußenwandung 170 an und teilt den Innenraum 154 des Trockenbehälters 100 in eine erste Kammer 151 und eine zweite Kammer 152. Die vorliegend jeweils als eine zylindrische Röhre gebildete erste und zweite Kammer 151, 152 sind nebeneinander angeordnet, wobei die erste und zweite Kammer 151, 152 durch den Steg 150 und die Behälteraußenwandung 170 begrenzt sind. Konkret weist die erste Kammer 151 einen sich im Wesentlichen entlang der Längserstreckung E erstreckenden ersten Teil einer Begrenzung auf, die im Wesentlichen durch eine erste äußere Längsseite 173 der Behälteraußenwandung 170 gebildet ist. Seitlich ist die erste Kammer 151 durch eine erstkammerseitige Steginnenseite des Stegs 150 und der ersten äußeren Längsseite 173 begrenzt. Die zweite Kammer 152 weist eine sich im Wesentlichen entlang der Längserstreckung E erstreckenden zweiten Begrenzungsteil auf, der vorliegend mit einer zweiten äußeren Längsseite 174 der Behälteraußenwandung 170 gebildet ist. Seitlich ist die zweite Kammer durch eine zweitkammerseitige Steginnenseite des Stegs 150 und die zweite äußere Längsseite 174 begrenzt. Die erste und die zweite Kammer 151, 152 ist oberseitig durch einen sich im Wesentlichen entlang der Längserstreckung E erstreckenden dritten Begrenzungsteil, nämlich eine Oberseite 175 der Behälteraußenwandung 170 begrenzt. Beide Kammern 151, 152 sind durch eine entsprechende Unterseite 176 der Behälteraußenwandung 170 unterseitig begrenzt. Der Steg 150 verbindet im Wesentlichen entlang der Längserstreckung E die Oberseite 175 und die Unterseite 176 der Behälteraußenwandung 170. Vorliegend ist der Steg 150 integral, d. h. einstückig an die Ober- und Unterseite 175, 176 angeschlossen. In einer anderen Ausführungsform kann der Steg auch verschieblich gelagert sein, um ggfs. pneumatisch aktuierbar, den Abstand zwischen dem Stegende 150.1 zur Innenseite der Kopfseite 171 der Behälteraußenwand 170-und damit die Nennweite des Durchlasses 155-- veränderlich zu gestalten. Dies kann zur Bildung einer nennweiten veränderlichen Drossel mittels des Durchlasses 155 als pneumatisches Element in der pneumatischen Verbindung 153 genutzt werden.

Aufgrund der im Wesentlichen kreiszylindrischen Röhrenform der ersten und zweiten Kammer 151, 152 laufen die Außenmantelflächen derselben am Steg 150, vorliegend unter Bildung des Stegs 150, zusammen, so dass eine in etwa 8-förmige Anschlussfläche 177 auf der Kopfseite 172 der Behälteraußenwand 170 gebildet ist. Teil der 8-förmigen Anschlussfläche 177 sind auch drei Auglöcher 178.1, 178.2, 178.3, die der ersten und zweiten Öffnung 110, 120 und dem Steg 150 zugeordnete sind. Die Auglöcher dienen zur Befestigung der Lufttrockneranordnung 100 an der Gehäuseanordnung G der Druckluftversorgungsanlage 1000.

Des Weiteren bezugnehmend auf Ansicht (B) der Fig. 3 sind im vorliegenden Ausführungsbeispiel die erste und zweite Kammer 151, 152 als einzige Kammern mit im Wesentlichen gleichen Innenvolumina ausgebildet, wobei der Steg 150 in seinem Verlauf auf einer der Längserstreckung E folgenden im Wesentlichen mittigen Längsachse M des Trockenbehälters 140 verläuft. Insbesondere ist gemäß dem vorliegenden Ausführungsbeispiel eine erste und zweite Kammerachse K1, K2 neben und im Wesentlichen parallel zu dem Steg 150 des Trockenbehälters verlaufend angeordnet, wobei jede der Kammerachsen K1, K2 zentral zu einer Kammer 151, 152 angeordnet ist. Ein Abstand D1 bzw. D2 der Kammerachse K1 zur Längsachse M bzw. ein zweiter Kammerabstand D2 der zweiten Kammerachse K2 zur mittigen Längsachse M ist vorliegend gleich; d. h. bei dem vorliegenden Ausführungsbeispiel sind die beiden Kammern 151, 152 mit gleicher geometrischer Form sowie gleichem Volumen innerhalb als auch gleich beabstandet und gleich verlaufend zur mittigen Längsachse M angeordnet. Insbesondere ist ein lichter Querschnitt eines Strömungspfades Q1, Q2, wie er als Öffnung der in etwa 8-förmigen Anschlussfläche 177 erkennbar ist, für beide Kammern 151, 152 gleich gebildet.

Im Übrigen zeigt Ansicht (B) der Fig. 3, dass --auf Höhe des Durchlasses 155 entlang der Längserstreckung E in der Behälteraußenwandung 170-- ein zu öffnender Zwischenanschluss 180 gebildet ist. Vorliegend weist die Behälteraußenwandung 170 auf der genannten Längsseite 174 eine Öffnung 178 auf, die in einer in etwa röhrenförmigen Erweiterung 179 der Kopfseite 171 den Durchlass 155 und die Öffnung 178 verbindet; diese Kombination der pneumatischen Verbindung 153 mit dem Durchlasses 155 und dem pneumatischen Zwischenanschluss 180 wird auch als Querkern bezeichnet. Der Verschluss 181 für den Zwischenanschluss 180 ist im vorliegenden Fall durch eine Mutterschraube gebildet und kann im Übrigen durch einen beliebigen anderen geeigneten drucksicheren Verschluss oder Pfropfen ausgeführt sein.

Im Übrigen kann die pneumatische Verbindung 153 in einer abgewandelten Ausführungsform als ein bloßer Durchlass 155 in einem Steg gebildet sein. Die abgewandelte Ausführungsform ist in Fig. 2 Ansicht (B) dargestellt, woraus erkennbar ist, dass ein Zwischenanschluss 180' mit Verschluss 181' auch auf andere Weise gebildet werden kann, nämlich unter leichter Verkürzung des Stegs 150 zugunsten eines Stegfortsatzes 150.3 gegenüber einem Stegabschnitt 150.4 zur Bildung einer pneumatischen Verbindung 153. Auf einer dem Motor 500 zugewandten Unterseite zu ist dann der vertikalen Stegerstreckung V folgend --d. h. praktisch im Steg integriert-- der Zwischenanschluss 180' gebildet. Während in der abgewandelten Ausführungsform der Zwischenanschluss 180' mit seiner in etwa röhrenförmigen pneumatischen Verbindung 153 zum Zwischenanschluss 180' entlang der vertikalen Stegerstreckung V folgt, so ist dies bei der in Fig. 3 gezeigten Ausführungsform relativ anders orientiert; d. h. die röhrenförmige Erweiterung des Zwischenanschlusses 180 der Fig.3 ist quer zur vertikalen Stegerstreckung V des Stegs 150 orientiert. Die Druckluftströmung DL wird bei der Ausführungsform der Fig.3 in der röhrenförmigen Erweiterung der pneumatischen Verbindung 153 quer zur Kammerachse K1, K2 geführt.

Fig. 4 zeigt einen pneumatischen Schaltplan eines pneumatischen Druckluftversorgungssystems 1003 mit der Druckluftversorgungsanlage 1000 der vorbeschriebenen Art einer Pneumatikanlage 1001 in Form einer Luftfederanlage und im Detail Y ein pneumatisches Element 1002, vorliegend in Form eines Wasserabscheiders zum Anschluss an einen Zwischenanschluss 180 oder 180' der Lufttrockneranordnung 100.

Die Druckluftversorgungsanlage 1000 dient zum Betreiben der Pneumatikanlage 1001. Die Druckluftversorgungsanlage 1000 weist dazu eine vorerwähnte Druckluftzuführung 1 und einen Druckluftanschluss 2 zur Pneumatikanlage 1001 auf. Die Druckluftzuführung 1 ist vorliegend mit einer Luftzuführung 0, einem der Luftzuführung 0 vorgeordneten Luftfilter 0.1 und einem der Luftzuführung 0 nachgeordneten über den Motor 500 angetriebenen Luftverdichter 400 --hier ein Doppelluftverdichter mit einer ersten Verdichterstufe 401 und einer zweiten Verdichterstufe 402-- sowie einem nicht näher bezeichnetem Anschluss der Druckluftzuführung 1 gebildet, an den sich in der Pneumatikhauptleitung 200, nämlich die vorerwähnten Abschnitte der 201, 210, 110 zum Anschluss des Trockenbehälters 140 sowie daran die Abschnitte 120, 220, 202 anschließen.

Vorliegend ist die erste und zweite Kammer 151, 152 der Lufttrockneranordnung 100 zur Bildung einer ersten Lufttrocknerstufe 101 und einer zweiten Lufttrocknerstufe 102 der Lufttrockneranordnung 100 in einer Reihenschaltung in der Pneumatikhauptleitung 200 vorgesehen. Die erste und zweite Lufttrocknerstufe 101, 102 sind mittels des Durchlasses 155 der vorerläuterten pneumatischen Verbindung 153 in der Pneumatikhauptleitung 200 zur Führung der Druckluftströmung DL pneumatisch verbunden. Der pneumatischen Verbindung ist der auch in Fig. 3 gezeigte Zwischenanschluss 180, 180' zugeordnet. Wie aus dem Detail Y der Fig. 4 ersichtlich ist, kann an den Zwischenanschluss 180, 180'ein pneumatisches Element 1002 wie eine Drossel oder ein hier gezeigter Wasserabscheider 1002' angeschlossen sein. Für den Fall, dass kein pneumatisches Element angeschlossen ist, kann der Zwischenanschluss 180, 180' beispielsweise mit einem vorerläuterten Verschlusselement 178 druckluftdicht verschlossen sein.

In einer im Detail X der Fig. 4 dargestellten Abwandlung kann der Luftverdichter einstufig mit einer einzigen Verdichterstufe 403 eines Kolbens oder einem einzigen Verdichterraum vorgesehen sein, wobei der Kolben von einem vorerwähnten Motor 500 antreibbar ist. In der Alternative ist die Luftzuführung und ein dieser vorgeordnetes Filterelement 0.1 mit einer Entlüftung 3 zusammengelegt.

Gemäß der in Fig. 4 gezeigten Ausführungsform zweigt eine Zweigleitung 230 an der Druckluftzuführung 1 von der Pneumatikhauptleitung 200 ab und führt zu einer Entlüftungsleitung 240 zum Entlüftungsanschluss 3 und einem der Entlüftung nachgeschalteten Entlüftungsfilter 3.1. Die Pneumatikhauptleitung 200 ist die einzige pneumatische Leitung der ersten pneumatischen Verbindung, die sich bis zur Pneumatikanlage 1001 mit einer weiteren Pneumatikleitung 600 fortsetzt. Die Pneumatikhauptleitung 200 verbindet pneumatisch die Druckluftzuführung 1 und den Druckluftanschluss 2, wobei in der Pneumatikhauptleitung 200 die Lufttrockneranordnung 100 und weiter in Richtung des Druckluftanschlusses 2 ein entsperrbares Rückschlagventil 311 sowie eine erste Drossel 331 angeordnet ist. Zwischen dem pneumatisch entsperrbaren Rückschlagventil 311 und dem Druckluftanschluss 2 ist eine erste Drossel 331 angeordnet. Ein Teil der Wegeventilanordnung 310 ist --neben dem entsperrbaren Rückschlagventil 311-- ein steuerbares Entlüftungsventil 312 in Reihenschaltung mit einer zweiten Drossel 332 in der Entlüftungsleitung 230. Die Reihenanordnung aus erster Drossel 331 und pneumatisch entsperrbarem Rückschlagventil 311 ist zwischen der Lufttrockneranordnung 100 und dem Druckluftanschluss 2 zur Pneumatikanlage 1001 in der Pneumatikhauptleitung 200 angeordnet.

Weiter weist die Druckluftversorgungsanlage 1000 die vorgenannte mit der Pneumatikhauptleitung 200 und dem Entlüftungsanschluss 3 und weiterem Filter 0.3 und/oder Schalldämpfer pneumatisch verbundene zweite pneumatische Verbindung auf --nämlich die vorerwähnte Entlüftungsleitung 230. Die Nennweite der zweiten Drossel 332 liegt oberhalb der Nennweite der ersten Drossel 331. Das Entlüftungsventil 312 ist vorliegend als ein vom pneumatisch entsperrbaren Rückschlagventil 311 separates 3/2-Wegeventil gebildet und in der durch die Entlüftungsleitung 230 gebildeten zweiten pneumatischen Verbindung angeordnet. Das steuerbare Entlüftungsventil 312 ist als indirekt geschaltetes Relaisventil Teil einer Ventilanordnung 300 mit einem vorerwähnten Steuerventil 320 in Form eines 3/2-Wege-Magnetventils. Das Steuerventil 320 kann mit einem über eine Steuerleitung 321 übermittelbaren Steuersignal in Form eines Spannungs- und/oder Stromsignals an die Spule 322 des Steuerventils 320 angesteuert werden. Bei Ansteuerung kann das Steuerventil 320 von der in Fig. 4 gezeigten stromlos geschlossenen Stellung in eine pneumatisch geöffnete bestromte Stellung überführt werden, in der ein Steuerdruck --über eine pneumatische Steuerleitung 250 aus der Pneumatikhauptleitung 200 abgeleiteter Druck zur pneumatischen Steuerung des steuerbaren Entlüftungsventils 312 als Relaisventil-- weitergegeben wird. Das steuerbare Entlüftungsventil 312 ist vorliegend zusätzlich mit einer Druckbegrenzung 313 versehen. Die Druckbegrenzung 313 greift über eine pneumatische Steuerleitung vor dem Entlüftungsventil 312 --konkret zwischen zweiter Drossel 332 und Entlüftungsventil 312-- einen Druck ab, welcher bei übersteigen eines Schwelldrucks den Kolben der 314 des Entlüftungsventils 312 gegen die Kraft einer einstellbaren Feder 315 vom Ventilsitz abhebt --also das steuerbare Entlüftungsventil 312 auch ohne Ansteuerung über das Steuerventil 320 in die geöffnete Stellung bringt. Auf diese Weise wird vermieden, dass ein ungewollt zu hoher Druck im pneumatischen System 1000 entsteht.

Das Steuerventil 320 trennt im vorliegend geschlossenen Zustand die Steuerleitung 250 und ist über eine weitere Entlüftungsleitung 260 mit der Entlüftungsleitung 240 zum Entlüftungsanschluss 3 pneumatisch verbunden. Mit anderen Worten ist ein zwischen Entlüftungsventil 312 und Steuerventil 320 liegender Leitungsabschnitt 251 der Steuerleitung 250 bei der in Fig. 4 gezeigten geschlossenen Stellung des Steuerventils 320 mit der weiteren Entlüftungsleitung 260 zwischen Steuerventil 320 und Entlüftung 3 verbunden. Die weitere Entlüftungsleitung 260 schließt dazu im weiteren Zweiganschluss 261 an die Entlüftungsleitung 230 und die weitere Entlüftungsleitung 240 an. Diese werden in einem zwischen dem weiteren Zweiganschluss 261 und dem Entlüftungsanschluss 3 liegenden Abschnitt einer Entlüftungsleitung 240 zusammengeführt.

Über das Steuerventil 320 kann bei Anstehen eines von der Pneumatikhauptleitung 200 oder von der weiteren Pneumatikleitung 600 über die pneumatische Steuerleitung 250 abgeleiteten Steuerdrucks das Entlüftungsventil 312 unter Druckbeaufschlagung des Kolbens 314 geöffnet werden. Der Kolben 314 ist vorliegend als ein Doppelkolben ausgeführt, so dass mit besonderem Vorteil versehen, das Überführen des Steuerventils 320 in den geöffneten Zustand nicht nur zum Öffnen des Entlüftungsventils 312 führt, sondern auch zum Entsperren des entsperrbaren Rückschlagventils 311. Mit anderen Worten dient das Steuerventil 320 der Magnetventilanordnung 300 zur Ansteuerung des separat vom Rückschlagventil 311 vorgesehenen Entlüftungsventils 312 als auch des Rückschlagventils 311. Dies führt zu einem beidseitigen pneumatischen Öffnen der Lufttrockneranordnung 100 bei Überführung des Steuerventils 320 in die geöffnete Stellung. Diese weitere durch die Druckluftversorgungsanlage 1000 einnehmbare Betriebsstellung kann im Betrieb zum Entlüften der Pneumatikanlage 1001 und gleichzeitig zum Regenerieren der Lufttrockneranordnung 100 genutzt werden.

Die in Fig. 4 gezeigte Betriebsstellung der Druckluftversorgungsanlage 1000 dient unter Durchfluss des Rückschlagventils 311 in Durchlassrichtung vor allem zum Befüllen der Pneumatikanlage 1001 über die Pneumatikhauptleitung 200 sowie die weitere Pneumatikleitung 600.

Die Pneumatikanlage 1001 der Fig. 4 in Form einer Luftfederanlage weist in diesem Fall eine Anzahl von vier sogenannten Bälgen 1011, 1012, 1013, 1014 auf, die jeweils einem Rad eines nicht näher dargestellten PKW-Fahrzeugs zugeordnet sind und eine Luftfeder des Fahrzeugs bilden. Des Weiteren weist die Luftfederanlage einen Speicher 1015 zur Speicherung schnellverfügbarer Druckluft für die Bälge 1011, 1012, 1013, 1014 auf. Jenen Bälgen 1011 bis 1014 sind in jeweils einer von einer Galerie 610 abgehenden Federzweigleitung 601, 602, 603, 604 jeweils ein Magnetventil 1111, 1112, 1113, 1114 vorgeordnet, welches jeweils als Niveauregelventil zum Öffnen oder Schließen einer mit einem Balg 1011 bis 1014 gebildeten Luftfeder dient. Die Magnetventile 1111 bis 1114 in den Federzweigleitungen 601 bis 604 sind als 2/2-Wegeventile ausgebildet. Einem Speicher 1015 ist in einer Speicherzweigleitung 605 ein Magnetventil 1115 in Form eines weiteren 2/2-Wegeventils als Speicherventil vorgeordnet. Die Magnetventile 1011 bis 1015 sind mittels der Feder- und Speicherzweigleitungen 601 bis 604 bzw. 605 an eine gemeinsame Sammelleitung, nämlich die vorbezeichnete Galerie 610 und dann an die weitere Pneumatikleitung 600, angeschlossen. Die Galerie 610 ist so über die Pneumatikleitung 600 an den Druckluftanschluss 2 der Druckluftversorgungsanlage 1000 pneumatisch angeschlossen. Vorliegend sind die Magnetventile 1111 bis 1115 in einem Ventilblock 1010 mit fünf Ventilen angeordnet. Die Magnetventile sind in Fig. 4 in einem stromlosen Zustand gezeigt - dabei sind die Magnetventile 1111 bis 1115 als stromlos geschlossene Magnetventile gebildet. Andere, hier nicht gezeigte abgewandelte Ausführungsformen können eine andere Anordnung der Magnetventile realisieren - es können auch weniger Magnetventile im Rahmen des Ventilblocks 1010 genutzt werden.

Zum Befüllen der Pneumatikanlage 1001 werden die den Bälgen 1011 bis 1014 vorgeordneten Magnetventile 1111 bis 1114 und/oder das dem Speicher 1015 vorgeordnete Magnetventil 1115 in eine geöffnete Stellung gebracht. Gleichwohl ist bei geschlossener Stellung der Magnetventile 1111 bis 1114 bzw. 1115 in der Pneumatikanlage 1001 --aufgrund des vorliegend nicht entsperrten Rückschlagventils 311- eine Betriebsstellung der Pneumatikanlage 1001 entkoppelt von der Druckluftversorgungsanlage 1000 möglich. Mit anderen Worten kann ein Querschalten von Bälgen 1011 bis 1015 (z. B. im Off-Road-Betrieb eines Fahrzeugs) ein Befüllen der Bälge 1011 bis 1015 aus dem Speicher 1015 oder eine Druckmessung in der Pneumatikanlage 1001 über die Galerie 610 vorgenommen werden, ohne dass die Druckluftversorgungsanlage 1000 druckbeaufschlagt wird. Insbesondere wird die Lufttrockneranordnung 100 aufgrund des vom Druckluftanschluss 2 zur Druckluftzuführung 1 gesperrten Rückschlagventils 311 und des geschlossenen Steuerventils 320 vor unnötiger Beaufschlagung mit Druckluft geschützt. In vorteilhafter Weise ist eine Beaufschlagung der Lufttrockneranordnung 100 mit Druckluft nicht bei jeder Betriebsstellung der Pneumatikanlage 1001 vorteilhaft. Vielmehr ist es für eine effektive und schnelle Regeneration der Lufttrockneranlage 100 vorteilhaft, wenn diese ausschließlich im Falle einer Entlüftung der Pneumatikanlage 1001 vom Druckluftanschluss 2 zur Druckluftzuführung 1 vorgenommen wird; dann mit entsperrtem Rückschlagventil 311. Dazu wird --wie oben erläutert-- das Steuerventil 320 in eine geöffnete Schaltstellung gebracht, so dass sowohl das Entlüftungsventil 312 geöffnet als auch das Rückschlagventil 311 entsperrt wird. Eine Entlüftung der Pneumatikanlage 1001 kann über die erste Drossel 331, das entsperrte Rückschlagventil 311 unter Regeneration der Lufttrockneranordnung 100 sowie anschließend über die zweite Drossel 332 und das geöffnete Entlüftungsventil 312 zur Entlüftung 3 erfolgen.

Anders ausgedrückt ist zur gleichzeitigen entsperrten Betätigung des Rückschlagventils 311 und zum öffnenden Betätigen des Entlüftungsventils 312 ein vom Steuerventil 320 pneumatisch ansteuerbarer Steuerkolben 314 als Doppelrelaiskolben vorgesehen mit einem Relaisentlüftungskörper 314.1 des Entlüftungsventils und ein Relaisentsperrkörper 314.2 für das entsperrbare Rückschlagventil 311. Der Doppelrelaiskolben verdeutlicht vorliegendes Prinzip zum Entsperren des Rückschlagventils 311 und gleichzeitiges Betätigen des Entlüftungsventils 312 über die zwei gekoppelten Betätigungselemente --nämlich über den Relaisentsperrkörper 314.2 und den Relaisentlüftungskörper 314.1-- die als einstückiger Doppelrelaiskörper oder in einer Abwandlung auch als separate Körper ausgebildet werden können. Im Rahmen einer besonders bevorzugten Abwandlung einer konstruktiven Realisierung können die vorgenannten Betätigungselemente des Doppelrelaiskolbens als einstückige Bereiche eines Doppelrelaiskolbens, gebildet sein.

Anhand der im Folgenden beschriebenen Fig. 5 werden unterschiedliche Betriebsstellungen der Druckluftversorgungsanlage 1000 unter prinzipieller Darstellung der Strömungspfade der Druckluftströmung DL an einem vergrößerten Ausschnitt der Fig. 2(A) erläutert. Zum Befüllen einer Pneumatikanlage 1001 zu einem Druckluftanschluss 2 zeigt Fig. 5 in durchgezogener Linie die Führung zunächst einer Luft L aus einer Ansaugung 0 über den Bauraum des Motors 500 zum Verdichter 400, der hier mit einer ersten Verdichterstufe 401 und in einer zweiten Verdichterstufe 402 ausgeführt ist. Die Luft L gelangt von der ersten Verdichterstufe 401 über eine hinter der Zeichnungsebene liegenden pneumatischen Verbindung zwischen den Verdichterstufen in die zweite Verdichterstufe 402; nämlich an dem Kreispunktsymbol. von dort wird die vorverdichtete Luft über die Druckluftzuführung 1 zur Pneumatikhauptleitung 200 geführt. Über die Pneumatikhauptleitung 200 gelangt die so verdichtete Luft als Druckluft DL in die Trockneranordnung 100 und wird dort im Wesentlichen U-förmig durchgeführt wie anhand von Fig. 1 bis Fig. 3 beschrieben. Der weitere Verlauf der Pneumatikhauptleitung 200 erfolgt in der Anschlussebene A1, d. h. in einer Kanalführung, die vorliegend im Gehäuse der Ventilanordnung 300 gebildet ist - also wie sie in Fig. 2(B) als Leitungsabschnitte 201, 202 angedeutet ist. Im unteren Bereich der Ventilanordnung 300 gelangt die Druckluft über das entsperrbare Rückschlagventil 311 zum Druckluftanschluss 2.

In einer dazu alternativen Betriebsweise eines Boost-Füllmodus kann Druckluft gemäß dem strichpunktierten Linienverlauf über einen Speicheranschluss 4 direkt der mit dem Kreispunktsymbol versehenen Zuführung der zweiten Verdichterstufe 402 zugeführt werden; und dann wiederum über die Druckluftzuführung 1 in der vorbeschriebenen Weise dem Druckluftanschluss 2 zugeführt werden - d. h. über die Lufttrockneranordnung 100, die Pneumatikhauptleitung 200 in der Anschlussebene A1 und das Rückschlagventil 311.

In einem strichpunktiert dargestellten umgekehrten Fall einer Druckluftführung für eine Entlüftung der Pneumatikanlage 1001 wird Druckluft über den Druckluftanschluss 2 und über das nun vom Doppelrelaiskolben 314.2 entsperrte Rückschlagventil 311 wiederum der Pneumatikhauptleitung 200 in der Anschlussebene A1 zugeführt. In einem weiteren Teil der Ventilanordnung 300 gelangt die Entlüftungsströmung ES über die Entlüftungsleitung 230 zu einer weiteren Entlüftungsleitung 240 und dann zum Entlüftungsanschluss 3 bei geöffnetem Entlüftungsventil 312.

### Bezugszeichenliste (Bestandteil der Beschreibung)

- 0: Luftzuführung, Ansaugung
- 0.1: Luftfilter
- 0.3: weiterer Filter
- 1: Druckluftzuführung
- 2: Druckluftanschluss
- 3: Entlüftungsanschluss
- 3.1: Entlüftungsfilter
- 4: Speicheranschluss
- 100: Lufttrockneranordnung
- 101: erste Lufttrocknerstufe
- 102: zweite Lufttrocknerstufe
- 110: erste Öffnung
- 120: zweite Öffnung
- 130: Anschlussflansch
- 131: Flanschsteg
- 131.1: Feder
- 131.2: Nut
- 140: Trockenbehälter
- 150: Steg
- 150.1: erstes Stegende
- 150.2: zweites Stegende
- 150.3: Stegfortsatz
- 150.4: Stegabschnitt
- 151: erste Kammer
- 152: zweite Kammer
- 153: pneumatische Verbindung
- 154: Innenraum
- 155: Durchlass
- 160: Druckplattenanordnung
- 161, 162: erste und zweite Druckplatte
- 163, 164: Druckfeder
- 170: Behälteraußenwand
- 171, 172: Kopfseite
- 173: äußere Längsseite
- 174: zweite äußere Längsseite
- 175: Oberseite
- 176: Unterseite
- 177: 8-förmige Anschlussfläche
- 178: Verschlusselement
- 178.1, 178.2, 178.3: Auglöcher
- 179: röhrenförmige Erweiterung
- 180: Zwischenanschluss
- 180': Zwischenanschluss
- 181, 181': Verschluss
- 200: Pneumatikhauptleitung
- 201: erster Teil der Pneumatikhauptleitung
- 202: zweiter Teil der Pneumatikhauptleitung
- 203: dritter Teil der Pneumatikhauptleitung
- 204: vierter Teil der Pneumatikhauptleitung
- 210: erster Anschluss
- 220: zweiter Anschluss
- 230: Zweigleitung
- 240: Entlüftungsleitung
- 250: pneumatische Steuerleitung
- 251: Leitungsabschnitt
- 260: weitere Entlüftungsleitung
- 261: Zweiganschluss
- 300: Ventilanordnung
- 310: Wegeventilanordnung
- 311: Rückschlagventil
- 312: Entlüftungsventil
- 313: Druckbegrenzung
- 314: Steuerkolben
- 314.1: Relaisentlüftungskörper
- 314.2: Doppelrelaiskolben
- 314.2: Relaisentsperrkörper
- 315: einstellbare Feder
- 320: Steuerventil, Magnetventil
- 321: Steuerleitung
- 322: Spule
- 331: erste Drossel
- 332: zweite Drossel
- 400: Luftverdichter
- 401: erster Verdichterbereich
- 402: zweiter Verdichterbereich
- 403: Verdicherstufe
- 500: Motor
- 600: Pneumatikleitung
- 601, 602, 603, 604: Federzweigleitung
- 605: Speicherzweigleitung
- 610: Galerie
- 1000: Druckluftversorgungsanlage
- 1001: Pneumatikanlage
- 1002, 1002': pneumatisches Element, Wasserabscheider
- 1003: Druckluftversorgungssystem
- 1010: Ventilblock
- 1011, 1012, 1013, 1014: Bälge
- 1111 bis 1114: Magnetventil
- 1015: Speicher
- A: Anschlussabstand
- A1: Anschlussebene
- A2: Anschlussseite
- D1, D2: Abstand
- DL: Druckluft, Druckluftströmung
- E: Längserstreckung
- G: Gehäuseanordnung
- G1, G2, G3: Gehäuseabschnitte
- K1, K2: erste und zweite Kammerachse
- L: Luft
- M: Längsachse
- Q1, Q2: Querschnitt des Strömungspfades
- R1, R2: Strömungsrichtung
- S1: erster Schenkel
- S2: zweiter Schenkel
- B: Basis
- T: Trockengranulat
- V: Vertikale Stegerstreckung
- X, Y: Detail

## Patentansprüche

1. Druckluftversorgungsanlage (1000) zum Betreiben einer Pneumatikanlage (1001) mit einer Druckluftströmung (DL), insbesondere einer Luftfederanlage eines Fahrzeugs, vorzugsweise eines PKWs, aufweisend:
- eine Lufttrockneranordnung (100) in einer Pneumatikhauptleitung (200), die eine Druckluftzuführung (1) von einem Luftverdichter (400) und einen Druckluftanschluss (2) zu der Pneumatikanlage (1001) pneumatisch verbindet, und
- eine an die Pneumatikhauptleitung (200) pneumatisch angeschlossene Ventilanordnung (300) zur Steuerung der Druckluftströmung (DL), wobei
- die Lufttrockneranordnung (100) einen Trockenbehälter (140) mit einer Behälteraußenwandung (170) hat, wobei
- ein Steg (150) entlang einer Längserstreckung (E) des Trockenbehälters (140) einen von der Behälteraußenwandung (170) begrenzten Innenraum (154) in eine erste und eine zweite Kammer (151, 152) teilt, wobei die erste Kammer (151) und die zweite Kammer (152) durch den Steg (150) und die Behälteraußenwandung (170) begrenzt sind, und
- der Steg (150) längs der Längserstreckung (E) an die Behälteraußenwandung (170) anschließt und die erste Kammer (151) und die zweite Kammer (152) längs der Längserstreckung (E) nebeneinander angeordnet sind, **dadurch gekennzeichnet, dass**
- eine pneumatische Verbindung (153) die erste Kammer (151) mit der zweiten Kammer (152) verbindet, wobei
- die Druckluftströmung (DL) in der ersten Kammer (151) und der zweiten Kammer (152) gegenläufig und entlang der Längserstreckung (E) und in der pneumatischen Verbindung (153) quer zur Längserstreckung (E) führbar ist, wobei im Trockenbehälter (140) die erste und die zweite Kammer (151, 152) zur Bildung einer Reihenschaltung einer ersten und zweiten Lufttrocknerstufe (101, 102) der Lufttrockneranordnung (100) in der Pneumatikhauptleitung (200) nur über einen einzigen Durchlass (155) zur Bildung der pneumatischen Verbindung (153) innerhalb des Trockenbehälters (140) pneumatisch verbunden sind..

2. Druckluftversorgungsanlage (1000) nach Anspruch 1 **dadurch gekennzeichnet, dass** der Steg (150) entlang der Längserstreckung (E) und im Wesentlichen mittig auf der Längsachse (M) des Trockenbehälters (140) verläuft, wobei die erste und zweite Kammer (151, 152) im Wesentlichen gleiche Kammervolumina haben.

3. Druckluftversorgungsanlage (1000) nach einem der Ansprüche 1 bis 2 **dadurch gekennzeichnet, dass** eine erste Kammerachse (K1) der ersten Kammer (151) und eine zweite Kammerachse (K2) der zweiten Kammer (152) neben und im Wesentlichen parallel zu dem Steg (150), insbesondere der Längsachse (M), verlaufen.

4. Druckluftversorgungsanlage (1000) nach einem der Ansprüche 1 bis 3 **dadurch gekennzeichnet, dass** der Steg (150) als einziger Steg den Innenraum (154) des Trockenbehälters (140) in genau zwei, nämlich die erste Kammer (151) und die zweite Kammer (152), teilt, wobei eine erste Kammerachse (K1) der ersten Kammer (151) und eine zweite Kammerachse (K2) der zweiten Kammer (152) gleichbeabstandet vom Steg (150), insbesondere gleich beabstandet von der Längsachse (M), sind.

5. Druckluftversorgungsanlage (1000) nach einem der Ansprüche 1 bis 4 **dadurch gekennzeichnet, dass** die erste Kammer (151) einen ersten lichten Querschnitt (Q1) und die zweite Kammer (152) einen zweiten lichten Querschnitt (Q2) eines Strömungspfades für die Druckluftströmung (DL) aufweist, wobei der erste lichte Querschnitt (Q1) und der zweite lichte Querschnitt (Q2) längs der Längserstreckung (E) gleich groß sind, insbesondere die erste und die zweite Kammer (151, 152) mit weitgehend gleicher geometrischer Form und Abmessung ausgebildet sind.

6. Druckluftversorgungsanlage (1000) nach einem der Ansprüche 1 bis 5 **dadurch gekennzeichnet, dass** die erste Kammer (151) einen ersten lichten Querschnitt und die zweite Kammer (152) einen zweiten lichten Querschnitt eines Strömungspfades für die Druckluftströmung (DL) aufweist, wobei sich der erste lichte Querschnitt und/oder der zweite lichte Querschnitt längs der Längserstreckung (E) verändern, insbesondere sich in Form und/oder Größe verändern.

7. Druckluftversorgungsanlage (1000) nach einem der Ansprüche 1 bis 6, **dadurch gekennzeichnet, dass** die erste Kammer (151) und die zweite Kammer (152) einstückig mit der Behälteraußenwandung (170) und dem Steg (150) des Trockenbehälters (140) gebildet ist, wobei Trockengranulat (T) direkt in der ersten Kammer (151) und in der zweiten Kammer (152), insbesondere auch direkt in einem Durchlass (155), insbesondere einer pneumatischen Verbindung (153), der ersten und zweiten Kammer (151, 152), aufnehmbar ist.

8. Druckluftversorgungsanlage (1000) nach einem der Ansprüche 1 bis 7, **dadurch gekennzeichnet, dass** der Trockenbehälter (140) mit einer Wandstärke unterhalb von 4 mm, vorzugsweise unterhalb von 3.5mm, ausgelegt ist für einen Betriebsdruck von bis zu 30 bar, vorzugsweise von bis zu 40 bar, insbesondere für einen Berstdruck von wenigstens dem 1,5-fachen des Betriebsdruckes, insbesondere von wenigstens dem 2,5-fachen des Betriebsdruckes.

9. Druckluftversorgungsanlage (1000) nach einem der Ansprüche 1 bis 8, **dadurch gekennzeichnet, dass** ein erster und ein zweiter Anschluss (210, 220) der Pneumatikhauptleitung (200) von einer Anschlussebene (A1) der Ventilanordnung (300) zu einer Anschlussseite (A2) des Trockenbehälters (140) geführt ist, wobei der erste Anschluss (210) zur ersten Kammer (151) neben dem zweiten Anschluss (220) zur zweiten Kam-mer (152) gebildet ist, und wobei am Trockenbehälter (140) die Anschlussseite (A2) ei-ner Verbindungsebene (A3) mit der pneumatischen Verbindung (153) der ersten und zweiten Kammer (151, 152) gegenüberliegt.

10. Druckluftversorgungsanlage (1000) nach einem der Ansprüche 1 bis 9, **dadurch gekennzeichnet, dass** an einer Anschlussseite (A2) des Trockenbehälters (140) ein für die erste Kammer (151) und die zweite Kammer (152) gemeinsamer Anschlussflansch (130) angesetzt ist und der Anschlussflansch (130) eine erste, der ersten Kammer (151) zugeordnete, Öffnung (110) aufweist und eine zweite, der zweiten Kammer (152) zugeordnete, Öffnung (120) aufweist, wobei die erste Öffnung (110) und die zweite Öffnung (120) durch einen dem Steg (150) zugeordneten Flanschsteg (131) getrennt sind.

11. Druckluftversorgungsanlage (1000) nach einem der Ansprüche 1 bis 10, **dadurch gekennzeichnet, dass** eine Anschlussseite (A2) des Trockenbehälters (140) von einer Anschlussebene (A1) der Ventilanordnung (300) über einen Anschlussabstand (A) be-abstandet ist und ein erster Anschluss (210) der Pneumatikhauptleitung (210) zur Seite der Anschlussseite (A2) zur ersten Kammer (151) geführt und die erste Kammer (151) an eine Druckluftzuführung (1) und/oder einen Entlüftungsanschluss (3) angeschlossen ist.

12. Druckluftversorgungsanlage (1000) nach einem der Ansprüche 1 bis 11, **dadurch gekennzeichnet, dass** eine Anschlussseite (A2) des Trockenbehälters (140) von einer Anschlussebene (A1) der Ventilanordnung (300) über einen Anschlussabstand (A) be-abstandet ist und mittels der Ventilanordnung (300) auf der Seite der Anschlussebene (A1) ein zweiter Anschluss der Pneumatikhauptleitung (220) zu einem Druckluftanschluss (2) zu der Pneumatikanlage (1001) schaltbar ist sowie über den Anschlussabstand (A) zur zweiten Kammer (152) schaltbar ist.

13. Druckluftversorgungsanlage (1000) nach einem der Ansprüche 1 bis 12, dadurch ge-kennzeichnet, dass
- dass eine Anschlussseite (A2) des Trockenbehälters (140) von einer Anschluss-ebene (A1) der Ventilanordnung (300) über einen Anschlussabstand (A) beabstandet ist und ein Luftverdichter (400) wenigstens teilweise in dem Anschlussabstand (A) zwischen der Ventilanordnung (300) und Trockenbehälter (140) angeordnet ist, wobei
- wenigstens ein Teil (201, 202) der Pneumatikhauptleitung (200) zwischen dem Trockenbehälter (140) und der Ventilanordnung (300) in der Anschlussebene (A1) verläuft.

14. Druckluftversorgungsanlage (1000) nach einem der Ansprüche 1 bis 13, **gekennzeichnet durch** eine modular assemblierbare Baueinheit mit
- der Lufttrockneranordnung (100) sowie der Ventilanordnung (300),
- einem Motor (500) und einem Luftverdichter (400), insbesondere einen zweistufigen Luftverdichter, wobei der Motor (500) und der Luftverdichter (400) in der Baueinheit mit wenigstens einem Teil der Pneumatikhauptleitung (200) gebildet sind, und wobei
- der Motor (500) und die Lufttrockneranordnung (100) einerseits und die Ventilanordnung (300) anderseits des Luftverdichters (400) modular assemblierbar sind, insbesondere unter Bildung des wenigstens eines Teils (201, 202) der Pneumatikhauptleitung (200) in der Anschlussebene (A1) zwischen dem Trockenbehälter (140) und der Ventilanordnung (300).

15. Druckluftversorgungsanlage (1000) nach Anspruch 14, **dadurch gekennzeichnet, dass** - die Baueinheit eine Gehäuseanordnung mit einer Ventilanordnung (300), einem Luft-verdichter (400), einem Motor (500) und dem Trockenbehälter (140) aufweist, der eine erste Kammerachse (K1) und eine zweite Kammerachse (K2) und eine Anschlussseite (A2) hat, die von einer Anschlussebene (A1) der Ventilanordnung (300) über einen An-schlussabstand (A) beabstandet ist, wobei
- im Anschlussabstand (A) zwischen der Anschlussseite (A2) und der Anschlussebene (A1) der Luftverdichter (400) angeordnet ist, und
der Motor (500) sich parallel der ersten und zweiten Kammerachsen (K1, K2) des Trockenbehälters (140) und gegenüberliegend der Ventilanordnung (300) erstreckt.

16. Druckluftversorgungssystem (1003) mit einer Pneumatikanlage (1001) und mit einer Druckluftversorgungsanlage (1000) gemäß einem der vorhergehenden Ansprüche zum Betreiben der Pneumatikanlage (1001) mit einer Druckluftströmung (DL), insbesondere einer Luftfederanlage eines Fahrzeugs, vorzugsweise eines PKWs, wobei die Pneumatikhauptleitung (200) eine Druckluftzuführung (1) von einem Luftverdichter (400) und einen Druckluftanschluss (2) zu der Pneumatikanlage (1001) pneumatisch verbindet.

17. Fahrzeug, insbesondere PKW, mit einer Pneumatikanlage (1001), insbesondere einer Luftfederanlage, und einer Druckluftversorgungsanlage (1000) gemäß einem der Ansprüche 1 bis 15 zum Betreiben der Pneumatikanlage (1001) mit einer Druckluftströmung (DL).

18. Verwendung einer Druckluftversorgungsanlage (1000) gemäß einem der Ansprüche 1 bis 15 zum Betreiben der Pneumatikanlage (1001), insbesondere einer Luftfederanlage, mit einer Druckluftströmung (DL) in einem PKW, insbesondere in einem SUV.

## Claims

1. Compressed air supply unit (1000) for operating a pneumatic unit (1001) by means of a compressed air flow (DL), in particular for operating an air suspension unit of a vehicle, preferably a passenger car, having:
- an air dryer arrangement (100) in a main pneumatic line (200) that pneumatically links a compressed air feed (1) from an air compressor (400) and a compressed air connection (2) leading to the pneumatic unit (1001), and
- a valve arrangement (300), pneumatically connected to the main pneumatic line (200), for controlling the compressed air flow (DL), wherein
- the air dryer arrangement (100) has a drying container (140) having a container outer wall (170), wherein
- a partition (150) along a longitudinal extent (E) of the drying container (140) divides an internal space (154) delimited by the container outer wall (170) into a first and a second chamber (151, 152), wherein the first chamber (151) and the second chamber (152) are delimited by the partition (150) and the container outer wall (170), and
- the partition (150) adjoins the container outer wall (170) along the longitudinal extent (E), and the first chamber (151) and the second chamber (152) are arranged adjacent to one another along the longitudinal extent (E), **characterized in that**
- a pneumatic link (153) links the first chamber (151) to the second chamber (152), wherein
- the compressed air flow (DL) in the first chamber (151) and the second chamber (152) can be routed in opposite directions and along the longitudinal extent (E) and can be routed transversely to the longitudinal extent (E) in the pneumatic link (153), wherein the first and second chambers (151, 152) in the drying container (140) are pneumatically linked by just a single passage (155) to form the pneumatic link (153) within the drying container (140) in order to form a series circuit of a first and a second air dryer stage (101, 102) of the air dryer arrangement (100) in the main pneumatic line (200).

2. Compressed air supply unit (1000) according to Claim 1, **characterized in that** the partition (150) extends along the longitudinal extent (E) and substantially centrally on the longitudinal axis (M) of the drying container (140), wherein the first and second chambers (151, 152) have substantially identical chamber volumes.

3. Compressed air supply unit (1000) according to one of Claims 1 to 2,
**characterized in that** a first chamber axis (K1) of the first chamber (151) and a second chamber axis (K2) of the second chamber (152) extend adjacent to and substantially parallel to the partition (150), in particular to the longitudinal axis (M).

4. Compressed air supply unit (1000) according to one of Claims 1 to 3, **characterized in that** the partition (150) divides the internal space (154) of the drying container (140) as a single partition into precisely two chambers, namely the first chamber (151) and the second chamber (152), wherein a first chamber axis (K1) of the first chamber (151) and a second chamber axis (K2) of the second chamber (152) are at equal distances from the partition (150), in particular at equal distances from the longitudinal axis (M).

5. Compressed air supply unit (1000) according to one of Claims 1 to 4, **characterized in that** the first chamber (151) has a first clear cross section (Q1) and the second chamber (152) has a second clear cross section (Q2) of a flow path for the compressed air flow (DL), wherein the first clear cross section (Q1) and the second clear cross section (Q2) are of equal size along the longitudinal extent (E), in particular the first and second chambers (151, 152) are designed with a largely identical geometrical shape and dimensioning.

6. Compressed air supply unit (1000) according to one of Claims 1 to 5, **characterized in that** the first chamber (151) has a first clear cross section and the second chamber (152) has a second clear cross section of a flow path for the compressed air flow (DL), wherein the first clear cross section and/or the second clear cross section vary along the longitudinal extent (E), in particular vary in shape and/or size.

7. Compressed air supply unit (1000) according to one of Claims 1 to 6, **characterized in that** the first chamber (151) and the second chamber (152) are formed in one piece with the container outer wall (170) and the partition (150) of the drying container (140), wherein drying granules (T) can be accommodated directly in the first chamber (151) and in the second chamber (152), in particular also directly in a passage (155), in particular a pneumatic link (153), between the first and second chambers (151, 152).

8. Compressed air supply unit (1000) according to one of Claims 1 to 7, **characterized in that** the drying container (140) is designed with a wall thickness of less than 4 mm, preferably less than 3.5 mm, for an operating pressure of up to 30 bar, preferably of up to 40 bar, in particular for a bursting pressure of at least 1.5 times the operating pressure, in particular at least 2.5 times the operating pressure.

9. Compressed air supply unit (1000) according to one of Claims 1 to 8, **characterized in that** a first and a second connection (210, 220) of the main pneumatic line (200) are routed from a connection plane (A1) of the valve arrangement (300) to a connection side (A2) of the drying container (140), wherein the first connection (210) leading to the first chamber (151) is formed adjacent to the second connection (220) leading to the second chamber (152), and wherein, at the drying container (140), the connection side (A2) lies opposite a link plane (A3) containing the pneumatic link (153) between the first and second chambers (151, 152).

10. Compressed air supply unit (1000) according to one of Claims 1 to 9, **characterized in that** a connection flange (130) common to the first chamber (151) and the second chamber (152) is placed on a connection side (A2) of the drying container (140), and the connection flange (130) has a first opening (110) associated with the first chamber (151) and has a second opening (120) associated with the second chamber (152), wherein the first opening (110) and the second opening (120) are separated by a flange web (131) associated with the partition (150).

11. Compressed air supply unit (1000) according to one of Claims 1 to 10, **characterized in that** a connection side (A2) of the drying container (140) is spaced apart from a connection plane (A1) of the valve arrangement (300) by a connection spacing (A), and a first connection (210) of the main pneumatic line (210) to the side of the connection side (A2) is routed to the first chamber (151), and the first chamber (151) is connected to a compressed air feed (1) and/or a vent connection (3).

12. Compressed air supply unit (1000) according to one of Claims 1 to 11, **characterized in that** a connection side (A2) of the drying container (140) is spaced apart from a connection plane (A1) of the valve arrangement (300) by a connection spacing (A), and a second connection of the main pneumatic line (220) can be switched to a compressed air connection (2) leading to the pneumatic unit (1001) by means of the valve arrangement (300) on the side of the connection plane (A1) and can be switched to the second chamber (152) via the connection spacing (A).

13. Compressed air supply unit (1000) according to one of Claims 1 to 12, **characterized in that**
- a connection side (A2) of the drying container (140) is spaced apart from a connection plane (A1) of the valve arrangement (300) by a connection spacing (A), and an air compressor (400) is arranged at least partially in the connection spacing (A) between the valve arrangement (300) and the drying container (140), wherein
- at least part (201, 202) of the main pneumatic line (200) extends in the connection plane (A1) between the drying container (140) and the valve arrangement (300).

14. Compressed air supply unit (1000) according to one of Claims 1 to 13, **characterized by** a constructional unit that can be assembled in a modular fashion, having
- the air dryer arrangement (100) and the valve arrangement (300),
- a motor (500) and an air compressor (400), in particular a two-stage air compressor, wherein the motor (500) and the air compressor (400) are formed in the constructional unit by at least part of the main pneumatic line (200), and wherein
- the motor (500) and the air dryer arrangement (100), on the one hand, and the valve arrangement (300), on the other hand, of the air compressor (400) can be assembled in a modular fashion, in particular so as to form the at least one part (201, 202) of the main pneumatic line (200) in the connection plane (A1) between the drying container (140) and the valve arrangement (300).

15. Compressed air supply unit (1000) according to Claim 14, **characterized in that**
- the constructional unit has a housing arrangement having a valve arrangement (300), an air compressor (400), a motor (500) and the drying container (140), which has a first chamber axis (K1) and a second chamber axis (K2) and a connection side (A2), which is spaced apart from a connection plane (A1) of the valve arrangement (300) by means of a connection spacing (A), wherein
- the air compressor (400) is arranged in the connection spacing (A) between the connection side (A2) and the connection plane (A1), and
the motor (500) extends parallel to the first and second chamber axes (K1, K2) of the drying container (140) and opposite the valve arrangement (300) .

16. Compressed air supply system (1003) having a pneumatic unit (1001) and having a compressed air supply unit (1000) according to one of the preceding claims for operating the pneumatic unit (1001) by means of a compressed air flow (DL), in particular for operating an air suspension unit of a vehicle, preferably of a passenger car, wherein the main pneumatic line (200) pneumatically links a compressed air feed (1) from an air compressor (400) and a compressed air connection (2) leading to the pneumatic unit (1001).

17. Vehicle, in particular a passenger car, having a pneumatic unit (1001), in particular an air suspension unit, and a compressed air supply unit (1000) according to one of Claims 1 to 15 for operating the pneumatic unit (1001) by means of a compressed air flow (DL).

18. Use of a compressed air supply unit (1000) according to one of Claims 1 to 15 for operating the pneumatic unit (1001), in particular an air suspension unit, by means of a compressed air flow (DL) in a passenger car, in particular in an SUV.

## Revendications

1. Installation d'alimentation en air comprimé (1000) pour faire fonctionner une installation pneumatique (1001) avec un courant d'air comprimé (DL), en particulier une installation de suspension à air d'un véhicule, de préférence d'un véhicule de tourisme, présentant :
- un agencement de dessiccateur d'air (100) dans une conduite pneumatique principale (200), qui relie une alimentation en air comprimé (1) provenant d'un compresseur d'air (400) et un raccord d'air comprimé (2) à l'installation pneumatique (1001), et
- un agencement de soupape (300) raccordé pneumatiquement à la conduite pneumatique principale (200) pour la commande du courant d'air comprimé (DL), où
- l'agencement de dessiccateur d'air (100) présente un récipient sec (140) avec une paroi extérieure de récipient (170), où
- une membrure (150) le long d'une étendue longitudinale (E) du récipient sec (140) sépare un espace interne (154) limité par la paroi extérieure de récipient (170) en une première et une deuxième chambre (151, 152), la première chambre (151) et la deuxième chambre (152) étant limitées par la membrure (150) et la paroi extérieure de récipient (170), et
- la membrure (150) le long de l'étendue longitudinale (E) se raccorde à la paroi extérieure de récipient (170) et la première chambre (151) et la deuxième chambre (152) sont disposées l'une à côté de l'autre le long de l'étendue longitudinale (E),
**caractérisée en ce que**
- une liaison pneumatique (153) relie la première chambre (151) à la deuxième chambre (152),
- le courant d'air comprimé (DL) dans la première chambre (151) et la deuxième chambre (152) pouvant être guidé à contre-courant et le long de l'étendue longitudinale (E) et dans la liaison pneumatique (153) transversalement à l'étendue longitudinale (E), la première et la deuxième chambre (151, 152) étant connectées pneumatiquement dans le récipient sec (140) pour former un branchement en série d'un premier et d'un deuxième étage de dessiccateur d'air (101, 102) de l'agencement de dessiccateur d'air (100) dans la conduite pneumatique principale (200), seulement par le biais d'un seul passage (155) pour former la liaison pneumatique (153) à l'intérieur du récipient sec (140).

2. Installation d'alimentation en air comprimé (1000) selon la revendication 1, **caractérisée en ce que** la membrure (150) s'étend le long de l'étendue longitudinale (E) et essentiellement centralement sur l'axe longitudinal (M) du récipient sec (140), la première et la deuxième chambre (151, 152) ayant essentiellement les mêmes volumes de chambre.

3. Installation d'alimentation en air comprimé (1000) selon l'une quelconque des revendications 1 et 2, **caractérisée en ce qu'**un premier axe de chambre (K1) de la première chambre (151) et un deuxième axe de chambre (K2) de la deuxième chambre (152) s'étendent à côté de, et essentiellement parallèlement à la membrure (150), en particulier l'axe longitudinal (M).

4. Installation d'alimentation en air comprimé (1000) selon l'une quelconque des revendications 1 à 3, **caractérisée en ce que** la membrure (150), en tant que membrure unique, divise en deux exactement l'espace interne (154) du récipient sec (140), à savoir en la première chambre (151) et la deuxième chambre (152), un premier axe de chambre (K1) de la première chambre (151) et un deuxième axe de chambre (K2) de la deuxième chambre (152) étant à même distance de la membrure (150), en particulier à même distance de l'axe longitudinal (M).

5. Installation d'alimentation en air comprimé (1000) selon l'une quelconque des revendications 1 à 4, **caractérisée en ce que** la première chambre (151) présente une première section transversale intérieure (Q1) et la deuxième chambre (152) présente une deuxième section transversale intérieure (Q2) d'un chemin d'écoulement pour le courant d'air comprimé (DL), la première section transversale intérieure (Q1) et la deuxième section transversale intérieure (Q2) ayant la même taille le long de l'étendue longitudinale (E), en particulier la première et la deuxième chambre (151, 152) étant réalisées avec une forme géométrique et des dimensions essentiellement identiques.

6. Installation d'alimentation en air comprimé (1000) selon l'une quelconque des revendications 1 à 5, **caractérisée en ce que** la première chambre (151) présente une première section transversale intérieure et la deuxième chambre (152) présente une deuxième section transversale intérieure d'un chemin d'écoulement pour le courant d'air comprimé (DL), la première section transversale intérieure et/ou la deuxième section transversale intérieure variant le long de l'étendue longitudinale (E), en particulier en termes de forme et/ou de taille.

7. Installation d'alimentation en air comprimé (1000) selon l'une quelconque des revendications 1 à 6, **caractérisée en ce que** la première chambre (151) et la deuxième chambre (152) sont formées d'une seule pièce avec la paroi extérieure de récipient (170) et la membrure (150) du récipient sec (140), un granulé sec (T) pouvant être reçu directement dans la première chambre (151) et la deuxième chambre (152), en particulier également directement dans un passage (155), en particulier d'une liaison pneumatique (153) de la première et de la deuxième chambre (151, 152).

8. Installation d'alimentation en air comprimé (1000) selon l'une quelconque des revendications 1 à 7, **caractérisée en ce que** le récipient sec (140) est conçu avec une épaisseur de paroi inférieure à 4 mm, de préférence inférieure à 3,5 mm, pour une pression de service allant jusqu'à 30 bars, de préférence jusqu'à 40 bars, en particulier pour une pression d'éclatement de moins de 1,5 fois la pression de service, en particulier de moins de 2,5 fois la pression de service.

9. Installation d'alimentation en air comprimé (1000) selon l'une quelconque des revendications 1 à 8, **caractérisée en ce qu'**un premier et un deuxième raccord (210, 220) de la conduite pneumatique principale (200) sont guidés depuis un plan de raccordement (A1) de l'agencement de soupape (300) jusqu'à un côté de raccordement (A2) du récipient sec (140), le premier raccord (210) à la première chambre (151) étant formé à côté du deuxième raccord (220) à la deuxième chambre (152) et le côté de raccordement (A2) d'un plan de connexion (A3) à la liaison pneumatique (153) au niveau du récipient sec (140) étant opposé à la première et à la deuxième chambre (151, 152).

10. Installation d'alimentation en air comprimé (1000) selon l'une quelconque des revendications 1 à 9, **caractérisée en ce qu'**au niveau d'un côté de raccordement (A2) du récipient sec (140) est montée une bride de raccordement (130) commune à la première chambre (151) et à la deuxième chambre (152) et la bride de raccordement (130) présente une première ouverture (110) associée à la première chambre (151) et une deuxième ouverture (120) associée à la deuxième chambre (152), la première ouverture (110) et la deuxième ouverture (120) étant séparées par une nervure de bride (131) associée à la membrure (150).

11. Installation d'alimentation en air comprimé (1000) selon l'une quelconque des revendications 1 à 10, **caractérisée en ce qu'**un côté de raccordement (A2) du récipient sec (140) est espacé d'un plan de raccordement (A1) de l'agencement de soupape (300) d'une distance de raccordement (A1), et un premier raccord (210) de la conduite pneumatique principale (210) vers le côté de raccordement (A2) est guidé vers la première chambre (151) et la première chambre (151) est raccordée à une alimentation en air comprimé (1) et/ou à un raccord de désaérage (3).

12. Installation d'alimentation en air comprimé (1000) selon l'une quelconque des revendications 1 à 11, **caractérisée en ce qu'**un côté de raccordement (A2) du récipient sec (140) est espacé d'un plan de raccordement (A1) de l'agencement de soupape (300) d'une distance de raccordement (A) et un deuxième raccord (220) de la conduite pneumatique principale à un raccord d'air comprimé (2) peut être commuté à l'installation pneumatique (1001) au moyen de l'agencement de soupape (300) du côté du plan de raccordement (A1) et peut être commuté à la deuxième chambre (152) par le biais de la distance de raccordement (A).

13. Installation d'alimentation en air comprimé (1000) selon l'une quelconque des revendications 1 à 12, **caractérisée en ce que**
- un côté de raccordement (A2) du récipient sec (140) est espacé d'un plan de raccordement (A1) de l'agencement de soupape (300) d'une distance de raccordement (A) et un compresseur d'air (400) est disposé au moins en partie dans la distance de raccordement (A) entre l'agencement de soupape (300) et le récipient sec (140),
- au moins une partie (201, 202) de la conduite pneumatique principale (200) s'étendant entre le récipient sec (140) et l'agencement de soupape (300) dans le plan de raccordement (A1) .

14. Installation d'alimentation en air comprimé (1000) selon l'une quelconque des revendications 1 à 13, **caractérisée par** une unité structurelle pouvant être assemblée de manière modulaire, comprenant
- l'agencement de dessiccateur d'air (100) ainsi que l'agencement de soupape (300),
- un moteur (500) et un compresseur d'air (400), en particulier un compresseur d'air à deux étages, le moteur (500) et le compresseur d'air (400) étant formés dans l'unité structurelle avec au moins une partie de la conduite pneumatique principale (200), et
- le moteur (500) et l'agencement de dessiccateur d'air (100) d'une part, et l'agencement de soupape (300) du compresseur d'air (400) d'autre part, pouvant être assemblés de manière modulaire, en particulier en formant l'au moins une partie (201, 202) de la conduite pneumatique principale (200) dans le plan de raccordement (A1) entre le récipient sec (140) et l'agencement de soupape (300).

15. Installation d'alimentation en air comprimé (1000) selon la revendication 14, **caractérisée en ce que**
- l'unité structurelle présente un agencement de boîtier avec un agencement de soupape (300), un compresseur d'air (400), un moteur (500) et le récipient sec (140) qui présente un premier axe de chambre (K1) et un deuxième axe de chambre (K2) et un côté de raccordement (A2) qui est espacé d'un plan de raccordement (A1) de l'agencement de soupape (300) d'une distance de raccordement (A),
- le compresseur d'air (400) étant disposé dans la distance de raccordement (A) entre le côté de raccordement (A2) et le plan de raccordement (A1), et
- le moteur (500) s'étendant parallèlement aux premier et deuxième axes de chambre (K1, K2) du récipient sec (140) et à l'opposé de l'agencement de soupape (300).

16. Système d'alimentation en air comprimé (1003) comprenant une installation pneumatique (1001) et une installation d'alimentation en air comprimé (1000) selon l'une quelconque des revendications précédentes pour faire fonctionner une installation pneumatique (1001) avec un courant d'air comprimé (DL), en particulier une installation de suspension à air d'un véhicule, de préférence d'un véhicule de tourisme, la conduite pneumatique principale (200) reliant pneumatiquement une alimentation en air comprimé (1) d'un compresseur d'air (400) et un raccord d'air comprimé (2) à l'installation pneumatique (1001) .

17. Véhicule, en particulier véhicule de tourisme, comprenant une installation pneumatique (1001), en particulier une installation de suspension à air, et l'installation d'alimentation en air comprimé (1000) selon l'une quelconque des revendications 1 à 15, pour faire fonctionner l'installation pneumatique (1001) avec un courant d'air comprimé (DL) .

18. Utilisation d'une installation d'alimentation en air comprimé (1000) selon l'une quelconque des revendications 1 à 15 pour faire fonctionner l'installation pneumatique (1001), en particulier une installation de suspension à air, comprenant un courant d'air comprimé (DL) dans un véhicule de tourisme, en particulier dans un 4x4.
